# EUROPEAN PATENT APPLICATION

(11) **EP 4 851 073 A1**
(43) Date of publication of application: **09.12.2026**
(21) Application number: 24934724.6
(22) Date of filing: 15.08.2024
(51) Int. Cl.: B65D 90/00, B65D 88/74, H01M 50/244

(54) **ENERGY STORAGE APPARATUS, ENERGY STORAGE SYSTEM, AND CHARGING NETWORK**

(30) Priority: 08.04.2024 WO PCT/CN2024/086600; 08.04.2024 WO PCT/CN2024/086624; 09.07.2024 WO PCT/CN2024/104575; 19.07.2024 WO PCT/CN2024/106588
(71) Applicant: Contemporary Amperex Technology Co., Limited, Ningde, Fujian 352100 (CN)
(72) Inventor: WANG, Guotao, Ningde, Fujian 352100 (CN); HE, Shuangjiang, Ningde, Fujian 352100 (CN); LI, Zhonghong, Ningde, Fujian 352100 (CN); WANG, Songnan, Ningde, Fujian 352100 (CN); ZHANG, Mingliang, Ningde, Fujian 352100 (CN); YAO, Xiufen, Ningde, Fujian 352100 (CN); YANG, Chunxiao, Ningde, Fujian 352100 (CN)
(74) Representative: Lorenz Seidler Gossel Part. mbB
(86) International application number: PCT/CN2024/112473
(87) International publication number: WO 2025/213658

(57) **Abstract**

Provided in the present application are an energy storage apparatus, an energy storage system, and a charging network. The energy storage apparatus comprises an energy storage container, wherein the energy storage container comprises a case and a plurality of battery modules accommodated in the case, each battery module comprising a plurality of battery cells. In a first direction and a second direction, the dimensions of the case are smaller than those of a standard container, the first direction and the second direction not being parallel to each other. In the energy storage apparatus provided in the present application, the dimension of the case in the first direction is smaller than the dimension of the standard container in the first direction, and the dimension of the case in the second direction is smaller than the dimension of the standard container in the second direction, such that during transportation, the energy storage container does not exceed the corresponding dimensions of standard containers for ocean or land transportation in the first direction and the second direction, facilitating improvement to the convenience of transportation of the energy storage container, and reducing the transportation cost of the energy storage container, thereby effectively reducing the use cost of the energy storage apparatus.

## Description

### CROSS-REFERENCE TO RELATED APPLICATIONS

The present application claims priorities to International Patent Application No. PCT/CN2024/086600, filed on April 8, 2024, and entitled "ENERGY STORAGE CONTAINER", International Patent No. PCT/CN2024/086624, filed on April 8, 2024, and entitled "ENERGY STORAGE CONTAINER", International Patent No. PCT/CN2024/104575, filed on July 9, 2024, and entitled "CONTAINER, ENERGY STORAGE APPARATUS, ENERGY STORAGE DEVICE, ENERGY STORAGE SYSTEM, AND CHARGING NETWORK", and International Patent No. PCT/CN2024/106588, filed on July 19, 2024, and entitled "CONTAINER, ENERGY STORAGE APPARATUS, ENERGY STORAGE SYSTEM, AND CHARGING NETWORK", which are incorporated herein by reference in their entireties.

### TECHNICAL FIELD

The present application relates to the field of energy storage technologies, and specifically, to an energy storage device, an energy storage system, and a charging network.

### BACKGROUND

With the rapid development of science and technology, electric energy has become an indispensable energy in people's production and life. To improve smoothness of electric energy supply and achieve normal operation of production and life, an energy storage device needs to be used. The energy storage device is used as a device that circularly stores and releases electric energy. By charging or discharging the energy storage device, electric energy is stored in the energy storage device, or electric energy stored in the energy storage device is supplied to a power consuming apparatus. The energy storage device is widely applied to fields such as industrial power supply, household power supply, temporary power supply, mobile power supply, wind power generation, and solar power generation.

During development of the energy storage device, in addition to improving performance of the energy storage device, how to reduce use costs of the energy storage device is also a problem that cannot be ignored. Therefore, how to reduce the use costs of the energy storage device is a technical problem that needs continuous improvement in energy storage technologies.

### SUMMARY

An objective of embodiments of the present application is to provide an energy storage device, an energy storage system, and a charging network, to resolve the technical problem of high use costs of the energy storage device in the related technologies.

To achieve the foregoing objective, technical solutions used in the embodiments of the present application are as follows: An energy storage device is provided, where the energy storage device includes an energy storage container, the energy storage container includes a container body and a plurality of battery modules accommodated in the container body, the battery module includes a plurality of battery cells, dimensions of the container body are less than dimensions of a standard container in a first direction and a second direction, and the first direction and the second direction are not parallel to each other.

The energy storage device provided in the embodiments of the present application at least has the following beneficial effects: The dimension of the container body of the energy storage device provided in the embodiments of the present application in the first direction is less than the dimension of the standard container in the first direction, and the dimension of the container body in the second direction is less than the dimension of the standard container in the second direction, so that during transportation, the energy storage container does not exceed corresponding dimensions of a standard container in the first direction and the second direction during ocean transportation or land transportation, which is beneficial to improving convenience during transportation of the energy storage container and reducing transportation costs of the energy storage container, thereby effectively reducing use costs of the energy storage device.

In some embodiments of the present application, the first direction is a height direction of the container body.

By using the foregoing technical solution, the dimension of the container body in the height direction is less than the dimension of the standard container in the height direction, so that during transportation, the energy storage container does not exceed a corresponding dimension of the standard container in the height direction during ocean transportation or land transportation, which is beneficial to improving the convenience during transportation of the energy storage container and reducing the transportation costs of the energy storage container, thereby effectively reducing the use costs of the energy storage device.

In some embodiments of the present application, the energy storage device includes m₁ energy storage containers, and a sum of dimensions of m₁₁ energy storage containers of the m₁ energy storage containers in the height direction of the container body is equal to a sum of dimensions of n₁ standard containers in the height direction, where m₁ is a positive integer greater than or equal to 2, and n₁ is a positive integer less than m₁₁.

By using the foregoing technical solution, the dimensions of the m₁₁ energy storage containers in the height direction of the container body are the dimensions of the n₁ standard containers in the height direction, so that space occupied by the m₁₁ energy storage containers when stacked is the same as space occupied by the n₁ standard containers, thereby improving utilization of space for placing the energy storage containers, which is beneficial to fully using height space during transportation, reducing a space waste during transportation of the energy storage containers, and reducing the transportation costs of the energy storage containers, thereby further reducing the use costs of the energy storage device.

In some embodiments of the present application, m₁₁=2, and n₁=1; or m₁₁=3, and n₁=1; or m₁₁=3, and n₁=2.

By using the foregoing technical solution, when a plurality of energy storage containers in the energy storage device are transported, a certain quantity of energy storage containers may be stacked in the height direction of the container body, so that the certain quantity of energy storage containers can just occupy space that at least one standard container needs to be occupy, thereby improving the utilization of the space for placing the energy storage containers, which is beneficial to reducing the transportation costs of the energy storage containers.

In some embodiments of the present application, the energy storage device includes a plurality of energy storage containers, and the plurality of energy storage containers are stacked in the height direction of the container body.

By using the foregoing technical solution, when the energy storage device occupies the same area, a larger number of energy storage containers can be configured, thereby improving an energy density of the energy storage device, and effectively improving performance of the energy storage device.

In some embodiments of the present application, the plurality of energy storage containers include a first energy storage container and a second energy storage container, the first energy storage container is located above the second energy storage container, a first connection portion is provided at a bottom of the container body of the first energy storage container, a second connection portion is provided at a top of the container body of the second energy storage container, and the first connection portion is connected to the second connection portion.

By using the foregoing technical solution, a structure of the plurality of energy storage containers being stacked become more stable, thereby effectively improving transportation safety of the energy storage containers and use safety of the energy storage device.

In some embodiments of the present application, the plurality of energy storage containers include a first energy storage container and a second energy storage container, the first energy storage container is located above the second energy storage container, a first limiting portion is provided at a bottom of the container body of the first energy storage container, a second limiting portion is provided at a top of the container body of the second energy storage container, and the first limiting portion cooperates with the second limiting portion to limit relative positions of the first energy storage container and the second energy storage container in a direction perpendicular to the height direction of the container body.

By using the foregoing technical solution, relative positions of two energy storage containers in a direction perpendicular to the height direction of the container body are effectively limited, thereby effectively reducing a risk of relative movement of two adjacent energy storage containers.

In some embodiments of the present application, the second direction is a length direction of the container body, and a dimension of the container body in a width direction is the same as a dimension of the standard container in the width direction.

By using the foregoing technical solution, during transportation, the energy storage container does not exceed a corresponding dimension of the standard container in the length direction during ocean transportation or land transportation, which is beneficial to improving the convenience during transportation of the energy storage container and reducing the transportation costs of the energy storage container, thereby effectively reducing the use costs of the energy storage device.

In some embodiments of the present application, the energy storage device includes a plurality of energy storage containers, m₂ energy storage containers of the plurality of energy storage containers are arranged in a row in the length direction of the container body, and m₃ rows of energy storage containers are stacked in the height direction of the container body, where m₂ and m₃ are both positive integers greater than or equal to 2.

By using the foregoing technical solution, when the energy storage device occupies the same area, a larger number of energy storage containers can be configured, thereby improving the energy density of the energy storage device, and effectively improving the performance of the energy storage device.

In some embodiments of the present application, a sum of dimensions of m₂₁ energy storage containers of the m₂ energy storage containers in the length direction of the container body is equal to a sum of dimensions of n₂ standard containers in the length direction, n₂ is a positive integer less than m₂₁, a sum of dimensions of m₃₁ rows of energy storage containers of the m₃ rows of energy storage containers in the height direction of the container body is equal to a sum of dimensions of n₃ standard containers in the height direction, and n₃ is a positive integer less than m₃₁.

By using the foregoing technical solution, the dimensions of the m₂₁ energy storage containers in the length direction of the container body are the dimensions of the n₂ standard containers in the length direction, and the dimensions of the m₃₁ rows of energy storage containers in the height direction of the container body are the dimensions of the n₃ standard containers in the height direction, so that space occupied by the plurality of energy storage containers when stacked is the same as space occupied by at least one standard container, thereby improving the utilization of the space for placing the energy storage containers, which is beneficial to fully using length space and height space during transportation, reducing the space waste during transportation of the energy storage containers, and reducing the transportation costs of the energy storage containers, thereby further reducing the use costs of the energy storage device.

In some embodiments of the present application, m₂₁=2, and n₂=1; or m₂₁=3, and n₂=1; or m₂₁=3, and n₂=2; and/or m₃₁=2, and n₃=1; or m₃₁=3, and n₃=1; or m₃₁=3, and n₃=2.

By using the foregoing technical solution, when a plurality of energy storage containers in the energy storage device are transported, not only can a certain quantity of energy storage containers be arranged in the length direction of the container body, but a certain quantity of energy storage containers can also be stacked in the height direction of the container body, so that the certain quantity of energy storage containers can just occupy space that at least one standard container needs to be occupy, thereby improving the utilization of the space for placing the energy storage containers, which is beneficial to reducing the transportation costs of the energy storage containers.

In some embodiments of the present application, the plurality of energy storage containers include a third energy storage container and a fourth energy storage container arranged in the length direction of the container body, a third connection portion is provided on a side of the container body of the third energy storage container facing the fourth energy storage container, a fourth connection portion is provided on a side of the container body of the fourth energy storage container facing the third energy storage container, and the third connection portion is connected to the fourth connection portion.

By using the foregoing technical solution, a structure of the plurality of energy storage containers being stacked become more stable, thereby effectively improving transportation safety of the energy storage containers and use safety of the energy storage device.

In some embodiments of the present application, the second direction is a width direction of the container body, and a dimension of the container body in a length direction is the same as a dimension of the standard container in the length direction.

By using the foregoing technical solution, during transportation, the energy storage container does not exceed a corresponding dimension of the standard container in the width direction during ocean transportation or land transportation, which is more beneficial to improving the convenience during transportation of the energy storage container and further reducing the transportation costs of the energy storage container, thereby further reducing the use costs of the energy storage device.

In some embodiments of the present application, the energy storage device includes a plurality of energy storage containers, m₄ energy storage containers of the plurality of energy storage containers are arranged in a column in the width direction of the container body, and m₅ columns of energy storage containers are stacked in the height direction of the container body, where m₄ and m₅ are both positive integers greater than or equal to 2.

By using the foregoing technical solution, when the energy storage device occupies the same area, a larger number of energy storage containers can be configured, thereby improving the energy density of the energy storage device, and effectively improving the performance of the energy storage device.

In some embodiments of the present application, a sum of dimensions of m₄₁ energy storage containers of the m₄ energy storage containers in the width direction of the container body is equal to a sum of dimensions of n₄ standard containers in the width direction, n₄ is a positive integer less than m₄₁, a sum of dimensions of m₅₁ columns of energy storage containers of the m₅ columns of energy storage containers in the height direction of the container body is equal to a sum of dimensions of n₅ standard containers in the height direction, and n₅ is a positive integer less than m₅₁.

By using the foregoing technical solution, the dimensions of the m₄₁ energy storage containers in the width direction of the container body are the dimensions of the n₄ standard containers in the width direction, and the dimensions of the m₅₁ columns of energy storage containers in the height direction of the container body are the dimensions of the n₅ standard containers in the height direction, so that space occupied by the plurality of energy storage containers when stacked is the same as space occupied by at least one standard container, thereby improving the utilization of the space for placing the energy storage containers, which is beneficial to fully using length space and height space during transportation, reducing the space waste during transportation of the energy storage containers, and reducing the transportation costs of the energy storage containers, thereby further reducing the use costs of the energy storage device.

In some embodiments of the present application, m₄₁=2, and n₄=1; or m₄₁=3, and n₄=1; or m₄₁=3, and n₄=2; and/or m₅₁=2, and n₅=1; or m₅₁=3, and n₅=1; or m₅₁=3, and n₅=2.

By using the foregoing technical solution, when a plurality of energy storage containers in the energy storage device are transported, not only can a certain quantity of energy storage containers be arranged in the width direction of the container body, but a certain quantity of energy storage containers can also be stacked in the height direction of the container body, so that the certain quantity of energy storage containers can just occupy space that at least one standard container needs to be occupy, thereby improving the utilization of the space for placing the energy storage containers, which is beneficial to reducing the transportation costs of the energy storage containers.

In some embodiments of the present application, the plurality of energy storage containers include a fifth energy storage container and a sixth energy storage container arranged in the width direction of the container body, a fifth connection portion is provided on a side of the container body of the fifth energy storage container facing the sixth energy storage container, a sixth connection portion is provided on a side of the container body of the sixth energy storage container facing the fifth energy storage container, and the fifth connection portion is connected to the sixth connection portion.

By using the foregoing technical solution, a structure of the plurality of energy storage containers being stacked become more stable, thereby effectively improving the transportation safety of the energy storage containers and the use safety of the energy storage device.

In some embodiments of the present application, the second direction is a length direction of the container body, and a dimension of the container body in a width direction is less than a dimension of the standard container in the width direction.

By using the foregoing technical solution, during transportation, the energy storage container does not exceed a corresponding dimension of the standard container in the length direction during ocean transportation or land transportation, and does not exceed a corresponding dimension of the standard container in the width direction during ocean transportation or land transportation either, which is more beneficial to improving the convenience during transportation of the energy storage container and further reducing the transportation costs of the energy storage container, thereby further reducing the use costs of the energy storage device.

In some embodiments of the present application, the energy storage device includes a plurality of energy storage containers, m₆ energy storage containers of the plurality of energy storage containers are arranged in the length direction of the container body, m₇ rows of energy storage containers are arranged into an array structure in the width direction of the container body, and m₈ array structures are stacked in the height direction of the container body, where m₆, m₇, and m₈ are all positive integers greater than or equal to 2.

By using the foregoing technical solution, when the energy storage device occupies the same area, a larger number of energy storage containers can be configured, thereby improving the energy density of the energy storage device, and effectively improving the performance of the energy storage device.

In some embodiments of the present application, a sum of dimensions of m₆₁ energy storage containers of the m₆ energy storage containers in the length direction of the container body is equal to a sum of dimensions of n₆ standard containers in the length direction, n₆ is a positive integer less than m₆₁, a sum of dimensions of m₇₁ energy storage containers of the m₇ energy storage containers in the width direction of the container body is equal to a sum of dimensions of n₇ standard containers in the width direction, n₇ is a positive integer less than m₇₁, a sum of dimensions of m₈₁ array structures of the m₈ array structures in the height direction of the container body is equal to a sum of dimensions of n₈ standard containers in the height direction, and n₈ is a positive integer less than m₈₁.

By using the foregoing technical solution, the dimensions of the m₆₁ energy storage containers in the length direction of the container body are the dimensions of the n₆ standard containers in the length direction, the dimensions of the m₇₁ energy storage containers in the width direction of the container body are the dimensions of the n₇ standard containers in the width direction, and the dimensions of the m₈₁ array structures in the height direction of the container body are the dimensions of the n₈ standard containers in the height direction, so that space occupied by the plurality of energy storage containers when stacked is the same as space occupied by at least one standard container, thereby improving the utilization of the space for placing the energy storage containers, which is beneficial to fully using length space, width space, and height space during transportation, reducing the space waste during transportation of the energy storage containers, and reducing the transportation costs of the energy storage containers, thereby further reducing the use costs of the energy storage device.

In some embodiments of the present application, m₆₁=2, and n₆=1; or m₆₁=3, and n₆=1; or m₆₁=3, and n₆=2; and/or m₇₁=2, and n₇=1; or m₇₁=3, and n₇=1; or m₇₁=3, and n₇=2; and/or m₈₁=2, and n₈=1; or m₈₁=3, and n₈=1; or m₈₁=3, and n₈=2.

By using the foregoing technical solution, when a plurality of energy storage containers in the energy storage device are transported, not only can a certain quantity of energy storage containers be arranged in the length direction and the width direction of the container body, but a certain quantity of energy storage containers can also be stacked in the height direction of the container body, so that the certain quantity of energy storage containers can just occupy space that at least one standard container needs to be occupy, thereby improving the utilization of the space for placing the energy storage containers, which is beneficial to reducing the transportation costs of the energy storage containers.

In some embodiments of the present application, the second direction is a width direction of the container body, and a dimension of the container body in a length direction is greater than a dimension of the standard container in the length direction.

By using the foregoing technical solution, a capacity of the container body can be increased, so that the container body can accommodate more battery modules, thereby effectively improving an electric capacity of the energy storage device, and effectively improving the performance of the energy storage device.

In some embodiments of the present application, the energy storage device further includes a control apparatus configured to be electrically connected to the battery modules, the container body includes a first compartment and a second compartment separated from each other, the battery modules are accommodated in the first compartment, and at least a part of the control apparatus is accommodated in the second compartment.

By using the foregoing technical solution, a risk of interference between the control apparatus and the battery modules is effectively reduced.

In some embodiments of the present application, the control apparatus includes a main control module, a general control module, a power distribution module, and a fire control module; the battery modules are electrically connected to the main control module; the general control module is electrically connected to the main control module; the main control module, the general control module, and the fire control module are all electrically connected to the power distribution module; and at least one of the main control module, the general control module, the power distribution module, and the fire control module is accommodated in the second compartment.

By using the foregoing technical solution, a risk of interference between the control apparatus and the battery modules is effectively reduced.

In some embodiments of the present application, a first access port and a second access port are provided on an outer wall of the container body, the first access port is provided opposite to the first compartment and in communication with the first compartment, and the second access port is provided opposite to the second compartment and in communication with the second compartment.

By using the foregoing technical solution, it is convenient to service the battery module in the first compartment and the control apparatus in the second compartment.

In some embodiments of the present application, the energy storage container further includes a first maintenance door, and the first maintenance door is movably connected to the container body to open or close the first access port.

By using the foregoing technical solution, it is convenient to service the battery module in the first compartment.

In some embodiments of the present application, the energy storage container further includes a second maintenance door, and the second maintenance door is movably connected to the container body to open or close the second access port.

By using the foregoing technical solution, it is convenient to service the control apparatus in the second compartment.

In some embodiments of the present application, the energy storage container further includes a first sealing plate, and the first sealing plate is detachably connected to the container body to open or close the first access port.

By using the foregoing technical solution, it is not only convenient to service the battery module in the first compartment, but a structure of the energy storage container can also be simplified, which reduces a volume of the energy storage container, and effectively improves an energy density of the energy storage device, thereby improving the performance of the energy storage device.

In some embodiments of the present application, the energy storage container further includes a second sealing plate, and the second sealing plate is detachably connected to the container body to open or close the second access port.

By using the foregoing technical solution, it is not only convenient to service the control apparatus in the second compartment, but a structure of the energy storage container can also be simplified, which reduces a volume of the energy storage container, and improves an energy density of the energy storage device, thereby effectively improving the performance of the energy storage device.

In some embodiments of the present application, the first compartment and the second compartment are arranged in the length direction or the width direction of the container body.

By using the foregoing technical solution, an internal layout structure of the energy storage container can be optimized, so that the internal structure of the energy storage container becomes more compact.

In some embodiments of the present application, the energy storage device further includes a thermal management apparatus configured to exchange heat with the energy storage container, the control apparatus includes a power distribution module, the thermal management apparatus is electrically connected to the power distribution module, and the thermal management apparatus and the power distribution module are both arranged on an outer side of the container body.

By using the foregoing technical solution, the energy storage container, the thermal management apparatus, and the power distribution module may be transported separately, which is more beneficial to improving convenience during transportation of the energy storage device and further reducing transportation costs of the energy storage device, thereby further reducing the use costs of the energy storage device.

In some embodiments of the present application, the thermal management apparatus and the power distribution module are arranged in parallel in the direction perpendicular to the height direction of the container body, and the thermal management apparatus and the power distribution module are both stacked with the container body in the height direction of the container body.

By using the foregoing technical solution, an occupied area of the thermal management apparatus and the power distribution module can be reduced, so that when the energy storage device occupies the same area, a larger number of energy storage containers can be configured, thereby improving the energy density of the energy storage device, and effectively improving the performance of the energy storage device.

In some embodiments of the present application, the energy storage device further includes a thermal management apparatus configured to exchange heat with the energy storage container, and the thermal management apparatus and the container body are stacked in the height direction of the container body.

By using the foregoing technical solution, an occupied area of the thermal management apparatus can be reduced, so that when the energy storage device occupies the same area, a larger number of energy storage containers can be configured, thereby improving the energy density of the energy storage device, and effectively improving the performance of the energy storage device.

In some embodiments of the present application, a size of the thermal management apparatus is less than or equal to the size of the standard container.

By using the foregoing technical solution, during transportation, the size of the thermal management apparatus does not exceed a corresponding size of the standard container during ocean transportation or land transportation, which is beneficial to improving convenience during transportation of the thermal management apparatus and reducing transportation costs of the thermal management apparatus, thereby further reducing the use costs of the energy storage device.

In some embodiments of the present application, a weight of the energy storage container is M, and M is less than or equal to 60 tons.

By using the foregoing technical solution, it facilitates handling operation of a related handling apparatus in a process of handling the energy storage container, thereby facilitating transferring of the energy storage container.

In some embodiments of the present application, M is less than or equal to 45 tons.

By using the foregoing technical solution, it better facilitates handling operation of a related handling apparatus in a process of handling the energy storage container, thereby better facilitating transferring of the energy storage container.

In some embodiments of the present application, a weight of the energy storage container is M, a total weight of the battery cells in the container body is M1, and (M1/M)×100%≥30%.

By using the foregoing technical solutions, a weight ratio of the battery cells in the energy storage container per unit volume can be increased, and an electric capacity of the energy storage container per unit volume can be increased. In addition, during transportation of the energy storage container, more battery cells contributing to an energy storage capacity that are difficult to produce and cannot be produced at a destination are transported, but other structures of the energy storage device may be produced at a place close to the destination, so that the other structures do not require transportation or require reduced transportation. After the energy storage container is assembled into the energy storage device, it is beneficial to reducing the transportation costs of the assembled energy storage device.

In some embodiments of the present application, (M1/M)×100%≥80%.

By using the foregoing technical solution, it is more beneficial to reducing transportation costs of the assembled energy storage device.

In some embodiments of the present application, a volume of the energy storage container is V, a total volume of the battery cells in the container body is V1, and (V1/V)×100%≥15%.

By using the foregoing technical solutions, a volume ratio of the battery cells in the energy storage container per unit volume can be increased, and the electric capacity of the energy storage container per unit volume can be increased. In addition, during transportation of the energy storage container, more battery cells contributing to the energy storage capacity that are difficult to produce and cannot be produced at a destination are transported, but other structures of the energy storage device may be produced at a place close to the destination, so that the other structures do not require transportation or require reduced transportation. After the energy storage container is assembled into the energy storage device, it is beneficial to reducing the transportation costs of the assembled energy storage device.

In some embodiments of the present application, (V1/V)×100%≥50%.

By using the foregoing technical solution, it is more beneficial to reducing transportation costs of the assembled energy storage device.

An embodiment of the present application further provides an energy storage system, including the energy storage device according to any one of the foregoing embodiments.

The energy storage system provided in this embodiment of the present application has at least the following beneficial effects: Because the energy storage system provided in this embodiment of the present application uses the energy storage device according to any one of the foregoing embodiments, use costs of the energy storage system are effectively reduced.

In some embodiments of the present application, the energy storage system further includes a converter and a power conversion apparatus, the converter is configured to be electrically connected to the power conversion apparatus and an electrical grid, and the power conversion apparatus is configured to be electrically connected to the energy storage container.

By using the foregoing technical solution, working stability of the energy storage system is effectively improved, thereby effectively improving the performance of the energy storage system.

An embodiment of the present application further provides a charging network, including a charging pile and the energy storage device according to any one of the foregoing embodiments, where the energy storage device is configured to provide electric energy for the charging pile.

The charging network provided in this embodiment of the present application has at least the following beneficial effects: Because the charging network provided in this embodiment of the present application uses the energy storage system according to any one of the foregoing embodiments, use costs of the charging network are effectively reduced.

### BRIEF DESCRIPTION OF THE DRAWINGS

To describe the technical solutions of the embodiments of the present application more clearly, the following briefly introduces the accompanying drawings required for describing the embodiments or the related art. Apparently, the accompanying drawings in the following description show only some embodiments of the present application, and a person of ordinary skill in the art may still derive other drawings from these accompanying drawings without creative efforts.
FIG. 1 is a schematic structural diagram of an energy storage system according to some embodiments of the present application;
FIG. 2 is a schematic structural diagram of a charging network according to some embodiments of the present application;
FIG. 3 is a schematic structural diagram of an energy storage device according to some embodiments of the present application;
FIG. 4 is a schematic structural diagram of the energy storage device shown in FIG. 3 with a first maintenance door and a second maintenance door removed;
FIG. 5 is a schematic structural diagram of an energy storage device according to some other embodiments of the present application;
FIG. 6 is a schematic structural diagram of an energy storage device according to still some other embodiments of the present application;
FIG. 7 is a schematic structural diagram of an energy storage device according to yet some other embodiments of the present application;
FIG. 8 is a schematic structural diagram of the energy storage device shown in FIG. 7 with a first sealing plate and a second sealing plate removed; and
FIG. 9 is a schematic structural exploded view of a battery cell according to embodiments of the present application.

Reference numerals in the drawings:
1000: Energy storage system;
2000: charging network;
100: energy storage device; 110: energy storage container; 111: container body; 1111: first compartment; 1112: second compartment; 1113: first connection portion; 1114: second connection portion; 1115: third connection portion; 1116: fourth connection portion; 1117: fifth connection portion; 1118: sixth connection portion; 112: battery module; 1121: battery cell; 11210: housing; 11211: shell; 11212: electrode assembly; 11213: end cover; 11214: accommodating cavity; 11215: electrode terminal; 120: control apparatus; 121: main control module; 122: general control module; 123: power distribution module; 124: fire control module; 130: thermal management apparatus; 140: first maintenance door; 150: second maintenance door; 160: first sealing plate; 170: second sealing plate;
200: converter;
300: power conversion apparatus; and
400: charging pile.

### DETAILED DESCRIPTION

To make the technical problems to be resolved by, the technical solutions, and the beneficial effects of the present application clearer and more comprehensible, the following further describes the present application in detail with reference to the accompanying drawings and embodiments. It should be understood that, the specific embodiments described herein are merely used for describing the present application and are not used for limiting the present application.

It should be noted that, when an element is described as being "fixed to" or "arranged on" another element, the element may be directly located on the another element or indirectly located on the another element. When an element is described as being "connected to" another element, the element may be directly connected to the another element or indirectly connected to the another element.

It should be understood that, orientation or position relationships indicated by terms such as "length", "width", "upper", "lower", "front", "rear", "left", "right", "vertical", "horizontal", "top", "bottom", "inner", and "outer" are orientation or position relationship shown based on the accompanying drawings, and are merely used for describing the present application and simplifying the descriptions, rather than indicating or implying that the mentioned apparatus or element should have a particular orientation or be constructed and operated in a particular orientation, and therefore, should not be construed as a limitation to the present application.

In addition, terms "first", "second", "third", "fourth", "fifth", "sixth", "seventh", "eighth", "ninth", and "tenth" are used herein for purposes of description, and are not intended to indicate or imply relative importance or implicitly point out the number of the indicated technical feature. Therefore, a feature defined by "first", "second", "third", "fourth", "fifth", "sixth", "seventh", "eighth", "ninth", or "tenth" may explicitly or implicitly include one or more features. In the descriptions of the present application, "a plurality of" means two or more, unless otherwise definitely and specifically limited.

The battery cell in the present application may include a lithium-ion secondary battery cell, a lithium-ion primary battery cell, a lithium-sulfur battery cell, a sodium-lithium-ion battery cell, a sodium-ion battery cell, a magnesium-ion battery cell, or the like, which is not limited in the embodiments of the present application. The battery cell may be in a cylindrical shape, a flat shape, a cuboid shape, or other shapes, which is also not limited in the examples of the present application.

A battery mentioned in the embodiments of the present application may be a single physical module including one or more battery cells to provide a higher voltage and a higher capacity. When a plurality of battery cells are provided, the plurality of battery cells are connected in series, in parallel, or in series-parallel through a bus component.

In some embodiments, the battery may be a battery module. When there are a plurality of battery cells, the plurality of battery cells are arranged and fixed to form a battery module.

In some embodiments, the battery may be a battery pack, and the battery pack includes an accommodating box and a battery cell, where the battery cell or battery module is accommodated in the accommodating box.

The battery cell generally includes an electrode assembly. The electrode assembly includes a positive electrode, a negative electrode, and a separator. During charging and discharging of the battery cell, active ions (such as lithium ions) are intercalated and deintercalated back and forth between the positive electrode and the negative electrode. The separator is arranged between the positive electrode and the negative electrode and can mainly serve to prevent a short circuit between the positive and negative electrodes while allowing active ions to pass through.

Optionally, the electrode assembly has a wound structure. The positive electrode plate and the negative electrode plate are wound into the wound structure.

Optionally, the electrode assembly has a laminated structure.

Optionally, the electrode assembly may be in a shape of a cylinder, a flat shape, or a polygon prism.

Energy storage devices have increasingly higher requirements on an area energy density of energy storage containers. Therefore, to increase an electric capacity, the weight of the energy storage container also increases accordingly. However, the energy storage container needs to be transported from a production place to a use place through land transportation and/or ocean transportation. Usually, there is a weight limit for transportation in land transportation and ocean transportation. Therefore, the increase in the energy density contradicts the weight of the energy storage container.

In view of this, the embodiments of the present application provide a new technical solution, and the technical solution described in the embodiments of the present application is applicable to the energy storage device and the energy storage system including the energy storage device.

The energy storage system may be applied to an energy storage power station, a wind power generation system, a solar power generation system, a mobile power system, a temporary power supply system, or the like. The energy storage power station may store electric energy at off-peak hours, and provide electric energy for related users or power consuming devices at peak hours. After wind energy collected by wind power generator groups in the wind power system is converted into electric energy, the energy storage device stores the electric energy, and supplies the electric energy to users at proper time. The solar power generation system may convert solar energy into electric energy, and then store the electric energy into the energy storage device, to supply the electric energy to users at proper time. The mobile power system may supply power to related power consuming devices in a place beyond coverage of an electrical grid power supply system, for example, in a remote mountainous area or in a remote wild. The temporary power supply system may supply power to users when power supply is insufficient. The energy storage system provided in the embodiments of the present application may be any power system in which the energy storage device needs to be used.

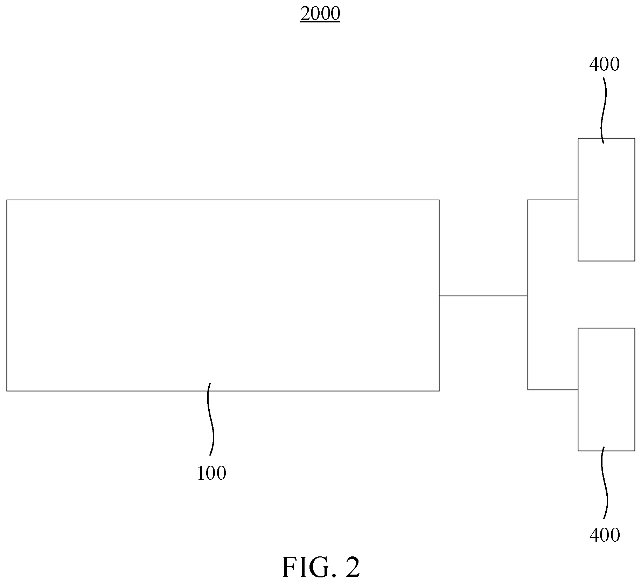

Referring to FIG. 2, FIG. 2 is a schematic structural diagram of a charging network 2000 according to some embodiments of the present application. Embodiments of the present application provide a charging network 2000, the charging network 2000 includes a charging pile 400, and the charging pile 400 is configured to charge a power consuming device. The charging network 2000 may further include an energy storage device 100, the energy storage device 100 is electrically connected to the charging pile 400, and the energy storage device 100 is configured to provide electric energy for the charging pile 400.

It should be noted that the charging pile 400 is electrically connected to battery cells 1121 in the energy storage device 100 through a cable. The battery cells 1121 may provide electric energy stored in the battery cells 1121 to the charging pile 400. The charging pile 400 includes a connector, and the connector may be connected to a power consuming device, to supplement energy for the power consuming device. Application of the energy storage device 100 to the charging network 2000 can effectively reduce use costs of the charging network 2000.

In one charging network 2000, there may be one charging pile 400, and the energy storage device 100 provides electric energy for the charging pile 400; alternatively, there may be a plurality of charging piles 400, and the energy storage device 100 provides electric energy for the plurality of charging piles 400.

For example, as shown in FIG. 2, the charging network 2000 includes one energy storage device 100 and two charging piles 400, and the energy storage device 100 provides electric energy to the two charging piles 400.

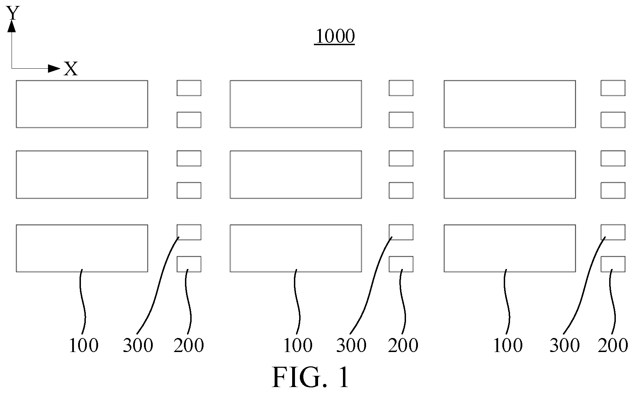

Referring to FIG. 1, FIG. 1 is a schematic structural diagram of an energy storage system 1000 according to some embodiments of the present application. An embodiment of the present application provides an energy storage system 1000. The energy storage system 1000 includes a power conversion apparatus 300. The power conversion apparatus 300 may be electrically connected to the electrical grid, to convert electric power provided by the electrical grid. The energy storage system 1000 may further include an energy storage device 100. The energy storage device 100 is electrically connected to the power conversion apparatus 300. The power conversion apparatus 300 imports electric energy, provided by the electrical grid, after power conversion into the energy storage device 100 for storage.

The power conversion apparatus 300 is configured to be connected between the electrical grid and the energy storage device 100. The electrical grid is configured to transmit electric energy, to store the electric energy into the energy storage device 100 by using the power conversion apparatus 300. Application of the energy storage device 100 to the energy storage system 1000 can effectively improve use costs of the energy storage system 1000.

The energy storage system 1000 may further include a converter 200, and the converter 200 is electrically connected to the power conversion apparatus 300 and is configured to electrically connect to the electrical grid.

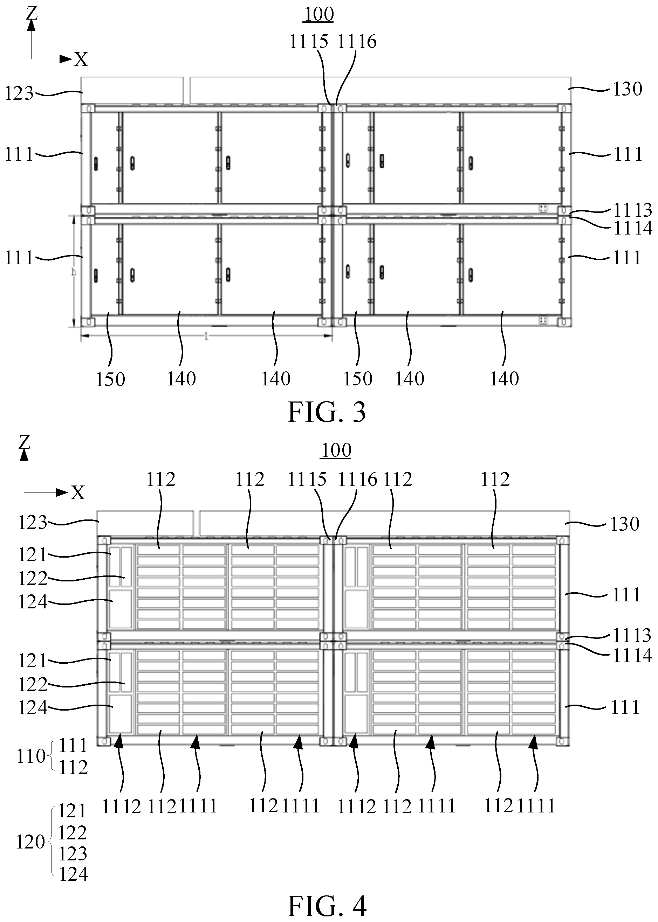

Referring to FIG. 3, FIG. 4, and FIG. 6 together, an embodiment of the present application provides an energy storage device 100 is provided, where the energy storage device 100 includes an energy storage container 110, the energy storage container 110 includes a container body 111 and a plurality of battery modules 112 accommodated in the container body 111, the battery module 112 includes a plurality of battery cells 1121, dimensions of the container body 111 are less than dimensions of a standard container in a first direction and a second direction, and the first direction and the second direction are not parallel to each other.

The standard container may have a size of a standard container during transportation, for example, 10 foots, 20 foots, 30 foots, 40 foots, or 45 foots. The size of the standard container satisfies a corresponding standard, and a length, a width, and a height of the standard container have corresponding dimensions.

10-foot may include the following: A dimension in a length direction X is 3048 mm, and a tolerance ranges from 0 mm to 5 mm; a dimension in a width direction Y is 2438 mm, and a tolerance ranges from 0 mm to 5 mm; and a dimension in a height direction Z is 2896 mm, 2591 mm, or not greater than 2438 mm, and a tolerance ranges from 0 mm to 5 mm.

20-foot may include the following: A dimension in the length direction X is 6058 mm, and a tolerance ranges from 0 mm to 6 mm; a dimension in the width direction Y is 2438 mm, and a tolerance ranges from 0 mm to 5 mm; and a dimension in the height direction Z is 2896 mm, 2591 mm, or not greater than 2438 mm, and a tolerance ranges from 0 mm to 5 mm.

30-foot may include the following: A dimension in the length direction X is 9125 mm, and a tolerance ranges from 0 mm to 10 mm; a dimension in the width direction Y is 2438 mm, and a tolerance ranges from 0 mm to 5 mm; and a dimension in the height direction Z is 2896 mm, 2591 mm, or not greater than 2438 mm, and a tolerance ranges from 0 mm to 5 mm.

40-foot may include the following: A dimension in the length direction X is 12192 mm, and a tolerance ranges from 0 mm to 10 mm; a dimension in the width direction Y is 2438 mm, and a tolerance ranges from 0 mm to 5 mm; and a dimension in the height direction Z is 2896 mm, 2591 mm, or not greater than 2438 mm, and a tolerance ranges from 0 mm to 5 mm.

45-foot may include the following: A dimension in the length direction X is 13716 mm, and a tolerance ranges from 0 mm to 10 mm; a dimension in the width direction Y is 2438 mm, and a tolerance ranges from 0 mm to 5 mm; and a dimension in the height direction Z is 2591 mm or 2896 mm, and a tolerance ranges from 0 mm to 5 mm.

Optionally, for standard containers of various sizes, a dimension within a ±5% range of the dimension may be considered as a dimension within a tolerance range.

In some embodiments, the first direction may be one of the height direction Z, the length direction X, or the width direction Y of the container body 111, and the second direction may be another of the height direction Z, the length direction X, or the width direction Y of the container body 111.

The dimension of the container body 111 in the first direction may be less than a dimension of a standard container with a standard size in the first direction, the dimension of the container body 111 in the second direction may be less than a dimension of a standard container with another standard size in the second direction, or dimensions of the container body 111 in the first direction and the second direction may be less than dimensions of the same standard container with the standard size in the first direction and the second direction.

For example, the dimension of the container body 111 in the first direction is less than the dimension of the 10-foot standard container in the first direction, and the dimension of the container body 111 in the second direction is less than the dimension of the 10-foot standard container in the second direction.

For example, the dimension of the container body 111 in the first direction is less than the dimension of the 10-foot standard container in the first direction, and the dimension of the container body 111 in the second direction is less than the dimension of the 20-foot standard container in the second direction.

For example, the dimension of the container body 111 in the first direction is less than the dimension of the 10-foot standard container in the first direction, and the dimension of the container body 111 in the second direction is less than the dimension of the 30-foot standard container in the second direction.

For example, the dimension of the container body 111 in the first direction is less than the dimension of the 10-foot standard container in the first direction, and the dimension of the container body 111 in the second direction is less than the dimension of the 40-foot standard container in the second direction.

For example, the dimension of the container body 111 in the first direction is less than the dimension of the 10-foot standard container in the first direction, and the dimension of the container body 111 in the second direction is less than the dimension of the 45-foot standard container in the second direction.

For example, the dimension of the container body 111 in the first direction is less than the dimension of the 20-foot standard container in the first direction, and the dimension of the container body 111 in the second direction is less than the dimension of the 10-foot standard container in the second direction.

For example, the dimension of the container body 111 in the first direction is less than the dimension of the 20-foot standard container in the first direction, and the dimension of the container body 111 in the second direction is less than the dimension of the 20-foot standard container in the second direction.

For example, the dimension of the container body 111 in the first direction is less than the dimension of the 20-foot standard container in the first direction, and the dimension of the container body 111 in the second direction is less than the dimension of the 30-foot standard container in the second direction.

For example, the dimension of the container body 111 in the first direction is less than the dimension of the 20-foot standard container in the first direction, and the dimension of the container body 111 in the second direction is less than the dimension of the 40-foot standard container in the second direction.

For example, the dimension of the container body 111 in the first direction is less than the dimension of the 20-foot standard container in the first direction, and the dimension of the container body 111 in the second direction is less than the dimension of the 45-foot standard container in the second direction.

For example, the dimension of the container body 111 in the first direction is less than the dimension of the 30-foot standard container in the first direction, and the dimension of the container body 111 in the second direction is less than the dimension of the 10-foot standard container in the second direction.

For example, the dimension of the container body 111 in the first direction is less than the dimension of the 30-foot standard container in the first direction, and the dimension of the container body 111 in the second direction is less than the dimension of the 20-foot standard container in the second direction.

For example, the dimension of the container body 111 in the first direction is less than the dimension of the 30-foot standard container in the first direction, and the dimension of the container body 111 in the second direction is less than the dimension of the 30-foot standard container in the second direction.

For example, the dimension of the container body 111 in the first direction is less than the dimension of the 30-foot standard container in the first direction, and the dimension of the container body 111 in the second direction is less than the dimension of the 40-foot standard container in the second direction.

For example, the dimension of the container body 111 in the first direction is less than the dimension of the 30-foot standard container in the first direction, and the dimension of the container body 111 in the second direction is less than the dimension of the 45-foot standard container in the second direction.

For example, the dimension of the container body 111 in the first direction is less than the dimension of the 40-foot standard container in the first direction, and the dimension of the container body 111 in the second direction is less than the dimension of the 10-foot standard container in the second direction.

For example, the dimension of the container body 111 in the first direction is less than the dimension of the 40-foot standard container in the first direction, and the dimension of the container body 111 in the second direction is less than the dimension of the 20-foot standard container in the second direction.

For example, the dimension of the container body 111 in the first direction is less than the dimension of the 40-foot standard container in the first direction, and the dimension of the container body 111 in the second direction is less than the dimension of the 30-foot standard container in the second direction.

For example, the dimension of the container body 111 in the first direction is less than the dimension of the 40-foot standard container in the first direction, and the dimension of the container body 111 in the second direction is less than the dimension of the 40-foot standard container in the second direction.

For example, the dimension of the container body 111 in the first direction is less than the dimension of the 40-foot standard container in the first direction, and the dimension of the container body 111 in the second direction is less than the dimension of the 45-foot standard container in the second direction.

For example, the dimension of the container body 111 in the first direction is less than the dimension of the 45-foot standard container in the first direction, and the dimension of the container body 111 in the second direction is less than the dimension of the 10-foot standard container in the second direction.

For example, the dimension of the container body 111 in the first direction is less than the dimension of the 45-foot standard container in the first direction, and the dimension of the container body 111 in the second direction is less than the dimension of the 20-foot standard container in the second direction.

For example, the dimension of the container body 111 in the first direction is less than the dimension of the 45-foot standard container in the first direction, and the dimension of the container body 111 in the second direction is less than the dimension of the 30-foot standard container in the second direction.

For example, the dimension of the container body 111 in the first direction is less than the dimension of the 45-foot standard container in the first direction, and the dimension of the container body 111 in the second direction is less than the dimension of the 40-foot standard container in the second direction.

For example, the dimension of the container body 111 in the first direction is less than the dimension of the 45-foot standard container in the first direction, and the dimension of the container body 111 in the second direction is less than the dimension of the 45-foot standard container in the second direction.

The container body 111 generally has a cuboid structure. The length direction X and the width direction Y of the container body 111 are both parallel to the horizontal plane. The length direction X of the container body 111 is parallel to the longest side of the cuboid structure of the container body 111. The height direction Z of the container body 111 is perpendicular to the ground. The width direction Y of the container body 111 is perpendicular to the length direction X of the container body 111 and the height direction Z of the container body 111.

A dimension l of the container body 111 in the length direction X is a distance between two ends of the container body 111 in the length direction X, a dimension k of the container body 111 in the width direction Y is a distance between two ends of the container body 111 in the width direction Y, and a dimension h of the container body 111 in the height direction Z is a distance between two ends of the container body 111 in the height direction Z. The dimension l, the dimension k, and the dimension h are maximum dimensions of an outer contour of the container body 111 in corresponding directions.

In some embodiments, the container body 111 may include eight corner pieces and six container body walls. The eight corner pieces are located at eight corners of the cuboid structure of the container body 111. The eight corner pieces respectively project out of the container body walls of the container body 111. A total span of two corner pieces arranged in the height direction Z is the height of the container body 111, a total span of two corner pieces arranged in the length direction X is the length of the container body 111, and a total span of two corner pieces arranged in the width direction Y is the width of the container body 111. When the dimension of the container body 111 is calculated, a pipe and a cable that are connected to the container body 111 and are located outside the container body 111 are not considered within the dimension of the container body 111.

The battery modules 112 are placed in the container body 111, the battery module 112 includes a plurality of battery cells 1121, and the plurality of battery cells 1121 may be connected in series, in parallel, or in series-parallel.

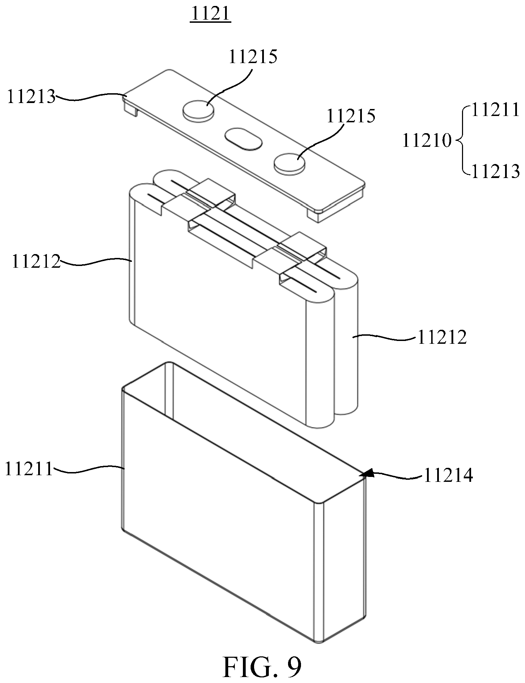

Referring to FIG. 9, the battery cell 1121 described in the embodiments of the present application includes an electrode assembly 11212 and a housing 11210. The housing 11210 includes an accommodating cavity 11214, and the electrode assembly 11212 is accommodated in the accommodating cavity 11214.

The housing 11210 includes a shell 11211 and an end cover 11213. When the battery cell 1121 is assembled, the electrode assembly 11212 may be first placed in the accommodating cavity 11214, and then the end cover 11213 closes the housing 11211. Then, an electrolyte is injected into the accommodating cavity 11214 through an electrolyte injection port on the end cover 11213.

Optionally, the housing 11210 may be further configured to accommodate an electrolyte, for example, an electrolyte.

The housing 11210 may be in various shapes, such as a cylinder or a cuboid. A shape of the housing 11210 may be determined based on a specific shape of the electrode assembly 11212. For example, if the electrode assembly 11212 has a cylindrical structure, a cylindrical structure may be selected as the housing 11210; if the electrode assembly 11212 has a cuboid structure, a cuboid structure may be selected as the housing 11210.

The housing 11210 may be made of various materials, such as copper, iron, aluminum, stainless steel, and aluminum alloy, which are not particularly limited in the embodiments of the present application.

There may be one or more electrode assemblies 11212 accommodated in the housing 11210. For example, as shown in FIG. 9, there are two electrode assemblies 11212 accommodated in the housing 11210.

The dimension of the container body 111 of the energy storage device 100 provided in the embodiments of the present application in the first direction is less than the dimension of the standard container in the first direction, and the dimension of the container body 111 in the second direction is less than the dimension of the standard container in the second direction, so that during transportation, the energy storage container 110 does not exceed corresponding dimensions of a standard container in the first direction and the second direction during ocean transportation or land transportation, which is beneficial to improving convenience during transportation of the energy storage container 110 and reducing transportation costs of the energy storage container 110, thereby effectively reducing use costs of the foregoing energy storage device 100.

In some embodiments of the present application, referring to FIG. 3, the first direction is the height direction Z of the container body 111.

For example, the dimension of the container body 111 in the height direction Z is less than the dimension of the 10-foot standard container in the height direction Z, that is, the height of the container body 111 is less than the height of the 10-foot standard container.

For example, the dimension of the container body 111 in the height direction Z is less than the dimension of the 20-foot standard container in the height direction Z, that is, the height of the container body 111 is less than the height of the 20-foot standard container.

For example, the dimension of the container body 111 in the height direction Z is less than the dimension of the 30-foot standard container in the height direction Z, that is, the height of the container body 111 is less than the height of the 30-foot standard container.

For example, the dimension of the container body 111 in the height direction Z is less than the dimension of the 40-foot standard container in the height direction Z, that is, the height of the container body 111 is less than the height of the 40-foot standard container.

For example, the dimension of the container body 111 in the height direction Z is less than the dimension of the 45-foot standard container in the height direction Z, that is, the height of the container body 111 is less than the height of the 45-foot standard container.

By using the foregoing technical solution, the dimension of the container body 111 in the height direction Z is less than the dimension of the standard container in the height direction Z, so that during transportation, a dimension of the energy storage container 110 does not exceed a corresponding dimension of the standard container in the height direction Z during ocean transportation or land transportation, which is beneficial to improving the convenience during transportation of the energy storage container 110 and reducing the transportation costs of the energy storage container 110, thereby effectively reducing the use costs of the energy storage device 100.

In some embodiments of the present application, the energy storage device 100 includes m₁ energy storage containers 110, and a sum of dimensions of m₁₁ energy storage containers 110 of the m₁ energy storage containers 110 in the height direction Z of the container body 111 is equal to a sum of dimensions of n₁ standard containers in the height direction Z, where m₁ is a positive integer greater than or equal to 2, and n₁ is a positive integer less than m₁₁.

The m₁₁ energy storage containers 110 of the m₁ energy storage containers 110 are any m₁₁ energy storage containers 110 of the m₁ energy storage containers 110. For example, the energy storage device 100 includes three energy storage containers 110, which are a first energy storage container, a second energy storage container, and a third energy storage container. If m₁₁=2, the two energy storage containers 110 may be the first energy storage container and the third energy storage container, or may be the first energy storage container and the second energy storage container, or may be the second energy storage container and the third energy storage container.

m₁₁ may be less than m₁, and a sum of dimensions of some energy storage containers 110 of the m₁ energy storage containers 110 in the height direction Z is equal to a sum of dimensions of n₁ standard containers in the height direction Z. For example, m₁=8, m₁₁=5, and n₁=3. The five energy storage containers 110 may be any five energy storage containers 110 in the eight energy storage containers 110, and a sum of heights of the five energy storage containers 110 is equal to the height of one standard container.

Alternatively, m₁₁=m₁, and a sum of dimensions of the m₁ energy storage containers 110 in the height direction Z is equal to a sum of dimensions of n₁ standard containers in the height direction Z. For example, m₁=2, m₁₁=m₁, and n₁=1, and a sum of heights of two energy storage containers 110 is equal to the height of one standard container.

Dimensions of the energy storage containers 110 in the height direction Z may be the same. To be specific, a dimension of the energy storage container 110 in the height direction Z may be one m₁₁^{th} a sum of dimensions of n₁ standard containers in the height direction Z. In other words, a sum of dimensions of m₁₁ energy storage containers 110 in the height direction Z is the sum of the dimensions of n₁ standard containers in the height direction Z. In this way, when n₁ is 1, the m₁₁ energy storage containers 110 can form a dimension of one standard container in the height direction Z, to be conveniently assembled into a dimension of one standard container for land transportation and ocean transportation; or when n₁ is an integer greater than 1, the m₁₁ energy storage containers 110 can form a dimension of n₁ standard containers in the height direction Z, which is also convenient for transportation in the dimension of the standard container. When the energy storage containers form the dimension of the standard container for transportation, transportation costs can be greatly reduced.

Optionally, dimensions of the m₁₁ energy storage containers 110 in the height direction Z may alternatively be different, but at least a sum of the dimensions of the m₁₁ energy storage containers 110 in the height direction Z needs to be set to a dimension of n₁ standard containers in the height direction Z. In this way, the m₁₁ energy storage containers 110 with different dimensions in the height direction Z may also be assembled into a dimension of one or more standard containers in the height direction Z, to greatly facilitate transportation and reduce the transportation costs.

In the embodiments of the present application, the sum of the dimensions of the m₁₁ energy storage containers 110 in the height direction Z being equal to a sum of dimensions of the n₁ standard containers in the height direction Z means that the sum of the dimensions of the m₁₁ energy storage containers 110 in the height direction Z is approximately equal to the sum of the dimensions of the n₁ standard containers in the height direction Z. When a dimension difference between the sum of the dimensions of the m₁₁ energy storage containers 110 in the height direction Z and the sum of the dimensions of the n₁ standard containers in the height direction Z is within the foregoing tolerance range, it may be considered that the dimensions are approximately equal.

Optionally, the difference indicating approximate equality is W, and W≤m₁₁×35 mm-30 mm. For example, m₁₁=2, and a maximum of the difference W indicating approximate equality may be 40 mm. When a difference between a sum of dimensions of two energy storage containers 110 in the height direction Z and a dimension of one standard container in the height direction Z is within 40 mm, it is satisfied that the sum of the dimensions of the two energy storage containers 110 in the height direction Z is equal to the dimension of one standard container in the height direction Z. For another example, m₁₁=3, and a maximum of the difference W indicating approximate equality may be 75 mm. When a difference between a sum of dimensions of three energy storage containers 110 in the height direction Z and a dimension of one standard container in the height direction Z is within 75 mm, it is satisfied that the sum of the dimensions of the three energy storage containers 110 in the height direction Z is equal to the dimension of one standard container in the height direction Z. Alternatively, when a difference between the sum of the dimensions of the three energy storage containers 110 in the height direction Z and a sum of dimensions of two standard containers in the height direction Z is within 75 mm, it is satisfied that the sum of the dimensions of the three energy storage containers 110 in the height direction Z is equal to the sum of the dimensions of the two standard containers in the height direction Z.

Optionally, due to a manufacturing error, there may be m₁₁ manufacturing errors W₁ in the sum of the dimensions of the m₁₁ energy storage containers 110 in the height direction Z, where W₁≤5 mm. In other words, that the sum of the dimensions of the m₁₁ energy storage containers 110 in the height direction Z is equal to the sum of the dimensions of the n₁ standard containers in the height direction Z may alternatively mean that the sum of the dimensions of the m₁₁ energy storage containers 110 in the height direction Z plus m₁₁×W₁ is equal to the sum of the dimensions of the n₁ standard containers in the height direction Z.

For example, m₁₁=2, n₁=1, and the height h of the energy storage container 110 is 1293 mm. A height H of a corresponding standard container is 2591 mm, n₁×H-m₁₁×h=5 mm, and 5 mm<m₁₁×W₁=10 mm. Therefore, the sum of the dimensions of the m₁₁ energy storage containers 110 in the height direction Z is equal to the sum of the dimensions of the n₁ standard containers in the height direction Z.

By using the foregoing technical solution, the dimensions of the m₁₁ energy storage containers 110 in the height direction Z of the container body 111 are the dimensions of the n₁ standard containers in the height direction Z, so that space occupied by the m₁₁ energy storage containers 110 when stacked is the same as space occupied by the n₁ standard containers, thereby improving utilization of space for placing the energy storage containers 110, which is beneficial to fully using height space during transportation, reducing a space waste during transportation of the energy storage containers 110, and reducing the transportation costs of the energy storage containers 110, thereby further reducing the use costs of the energy storage device 100.

In some embodiments of the present application, m₁₁=2, and n₁=1.

The energy storage device 100 may include more than two energy storage containers 110, for example, the energy storage device 100 includes three, five, or eight energy storage containers 110. Alternatively, there may be only two energy storage containers 110 in the energy storage device 100.

By setting the height of two energy storage containers 110 to the height of one standard container, when a plurality of energy storage containers 110 in the energy storage device 100 are transported, two adjacent energy storage containers 110 may be stacked in the height direction Z, so that the two energy storage containers 110 can just occupy space that one standard container needs to occupy, thereby improving the utilization of the space for placing the energy storage containers 110, which is beneficial to reducing the transportation costs of the energy storage containers 110.

In some embodiments of the present application, m₁₁=3, and n₁=1.

By setting the height of three energy storage containers 110 to the height of one standard container, when a plurality of energy storage containers 110 in the energy storage device 100 are transported, three adjacent energy storage containers 110 may be stacked in the height direction Z, so that the three energy storage containers 110 can just occupy space that one standard container needs to occupy, thereby improving the utilization of the space for placing the energy storage containers 110, which is beneficial to reducing the transportation costs of the energy storage containers 110.

In some embodiments of the present application, m₁₁=3, and n₁=2.

By setting the height of three energy storage containers 110 to the height of two standard containers, when a plurality of energy storage containers 110 in the energy storage device 100 are transported, three adjacent energy storage containers 110 may be stacked in the height direction Z, so that the three energy storage containers 110 can just occupy space that two standard containers need to occupy, thereby improving the utilization of the space for placing the energy storage containers 110, which is beneficial to reducing the transportation costs of the energy storage containers 110.

In some embodiments of the present application, referring to FIG. 3, the energy storage device 100 includes a plurality of energy storage containers 110, and the plurality of energy storage containers 110 are stacked in the height direction Z of the container body 111.

There may be any quantity of energy storage containers 110 in the energy storage device 100 that is greater than two. For example, the energy storage device 100 includes two energy storage containers 110, and during assembly of the energy storage device 100, the two energy storage containers 110 may be stacked in the height direction Z. For another example, the energy storage device 100 includes three energy storage containers 110, and during assembly of the energy storage device 100, the three energy storage containers 110 may be stacked in the height direction Z.

In some embodiments, when a quantity of energy storage containers 110 in the energy storage device 100 is excessively large, a container body 111 of the lowermost energy storage container 110 is easily damaged. Therefore, the sum of heights of the energy storage containers 110 stacked in the height direction Z is less than or equal to a sum of heights of eight standard containers stacked.

By using the foregoing technical solution, when the energy storage device 100 occupies the same area, a larger number of energy storage containers 110 can be configured, thereby improving the energy density of the energy storage device 100, and effectively improving the performance of the energy storage device 100.

In some embodiments of the present application, referring to FIG. 3, the plurality of energy storage containers 110 include a first energy storage container and a second energy storage container, the first energy storage container is located above the second energy storage container, a first connection portion 1113 is provided at a bottom of the container body 111 of the first energy storage container, a second connection portion 1114 is provided at a top of the container body 111 of the second energy storage container, and the first connection portion 1113 is connected to the second connection portion 1114.

The first connection portion 1113 and the second connection portion 1114 cooperate to form at least a part of a first connection structure used for connecting two energy storage containers 110 adjacent in the height direction Z. A connection manner between the first connection portion 1113 and the second connection portion 1114 may be, but is not limited to, welding, clamping, threaded connection, or the like.

Two energy storage containers 110 assembled in the height direction Z for transportation are connected and fixed by using the foregoing first connection structure. Then, a dimension of the n₁ standard containers formed by the m₁₁ energy storage containers 110 further includes height dimensions of first connection structures between the m₁₁ energy storage containers 110. In other words, when the first connection structure is provided, a dimension of each of some energy storage containers 110 of the m₁₁ energy storage containers 110 in the height direction Z may be a sum of a height of the energy storage container 110 and a height of a first connection structure connected to the energy storage container 110. The first connection structure connecting the energy storage containers 110 in the height direction Z also occupies the height dimension of the energy storage containers 110 to some extent.

For example, when the m₁₁ energy storage containers 110 are assembled and fixed for transportation by using the first connection structure, a total of a sum of dimensions of the m₁₁ energy storage containers 110 in the height direction Z and a sum of dimensions of m₁₁-1 first connection structures in the height direction Z is equal to a sum of dimensions of the n₁ standard containers in the height direction Z. Optionally, a quantity of first connection structures in the m₁₁ energy storage containers 110 may be less than m₁₁-1, and when these energy storage containers 110 are assembled into a dimension of a standard container, the dimension includes a sum of dimensions of the m₁₁ energy storage containers 110 in the height direction Z and a sum of dimensions of actual first connection structures.

For example, the dimension of the first connection structure in the height direction Z is W₂, and W₂≤30 mm. For example, m₁₁=3, n₁=2, and heights h of the energy storage containers 110 are all 845 mm. A height H of a corresponding standard container is 2591 mm, n₁×H-m₁₁×h=56 mm, and 56 mm<m₁₁×W₁+(m₁₁-1)×W₂=75 mm. Therefore, the sum of the dimensions of the m₁₁ energy storage containers 110 in the height direction Z is equal to the sum of the dimensions of the n₁ standard containers in the height direction Z. W=m₁₁×W₁+(m₁₁-1)×W₂.

Therefore, for the energy storage device 100 in the embodiments of the present application, when first connection structures are used during transportation, but the first connection structures are not needed between the energy storage containers 110 forming the energy storage device 100, that "the sum of the dimensions of the m₁₁ energy storage containers 110 in the height direction Z is equal to the sum of the dimensions of the n₁ standard containers in the height direction Z" should be understood as including heights of used first connection structures. In other words, the sum of the dimensions of the m₁₁ energy storage containers 110 in the height direction Z is equal to the sum of the dimensions of the n₁ standard containers in the height direction Z minus a sum of the heights of the used first connection structures. Such a case also belongs to cases of embodiments corresponding to claims 3 to 6 according to the present application.

For example, the first connection portion 1113 may be a first locking hole, the second connection portion 1114 may be a first locking member, and the first locking member is locked in the first locking hole.

For example, the first connection portion 1113 may be a second locking member, the second connection portion 1114 may be a second locking hole, and the second locking member is locked in the second locking hole.

For example, the first connection portion 1113 may be a first locking hole, the second connection portion 1114 may be a second locking hole, the first connection structure further includes a first connection member, where one end of the first connection member in the height direction Z of the container body 111 is connected in the first locking hole, and the other end of the first connection member in the height direction Z of the container body 111 is connected in the second locking hole.

By using the foregoing technical solution, a structure of the plurality of energy storage containers 110 being stacked become more stable, thereby effectively improving transportation safety of the energy storage containers 110 and use safety of the energy storage device 100.

In some embodiments of the present application, the plurality of energy storage containers 110 include a first energy storage container and a second energy storage container, the first energy storage container is located above the second energy storage container, a first limiting portion is provided at a bottom of the container body 111 of the first energy storage container, a second limiting portion is provided at a top of the container body 111 of the second energy storage container, and the first limiting portion cooperates with the second limiting portion to limit relative positions of the first energy storage container and the second energy storage container in a direction perpendicular to the height direction Z of the container body 111.

The first limiting portion cooperates with the second limiting portion to form at least a part of a limiting structure for limiting relative positions of two energy storage containers 110 adjacent in the height direction Z.

For example, the first limiting portion may be a first limiting hole, the second limiting portion may be a first limiting member, and the first limiting member is inserted into the first limiting hole in the height direction Z of the container body 111.

For example, the first limiting portion may be a second limiting member, the second limiting portion may be a second limiting hole, and the second limiting member is inserted into the second limiting hole in the height direction Z of the container body 111.

For example, the first limiting portion may be a first limiting hole, the second limiting portion may be a second limiting hole, and the limiting structure further includes a limiting member, where one end of the limiting member in the height direction Z of the container body 111 is inserted into the first limiting hole, and the other end of the limiting member in the height direction Z of the container body 111 is inserted into the second limiting hole.

By using the foregoing technical solution, relative positions of two energy storage containers 110 in a direction perpendicular to the height direction Z of the container body 111 are effectively limited, thereby effectively reducing a risk of relative movement of two adjacent energy storage containers 110.

In some embodiments of the present application, referring to FIG. 3, the second direction is a length direction X of the container body 111, and a dimension of the container body 111 in a width direction Y is the same as a dimension of the standard container in the width direction Y.

The dimension of the container body 111 in the width direction Y is the same as the dimension of the standard container in the width direction Y. This does not mean that the width of the container body 111 and the width of the standard container are exactly the same, but there may be an error within an error tolerance range between the two. For example, with reference to GB/T 1413-2008 and GB/T 1413-2023, a difference between the dimension of the container body 111 in the width direction Y and the dimension of the standard container in the width direction Y is within a range of ±5 mm.

It should be noted that in an actual application, the dimension of the container body 111 in the length direction X, the dimension of the container body 111 in the height direction Z, and the dimension of the container body 111 in the width direction Y may correspond to dimensions of standard containers of the same standard size, or may correspond to dimensions of standard containers of different standard sizes.

In some embodiments, the dimension of the container body 111 in the length direction X is less than a dimension of a standard container with a standard size in the length direction X, the dimension of the container body 111 in the height direction Z is less than a dimension of a standard container with another standard size in the height direction Z, and the dimension of the container body 111 in the width direction Y is the same as a dimension of a standard container with still another standard size in the width direction Y.

For example, the dimension of the container body 111 in the length direction X is less than a dimension of a 10-foot standard container in the length direction X, that is, the length of the container body 111 is less than the length of the 10-foot standard container; the dimension of the container body 111 in the height direction Z is less than a dimension of a 20-foot standard container in the height direction Z, that is, the height of the container body 111 is less than the height of the 20-foot standard container; and the dimension of the container body 111 in the width direction Y is the same as a dimension of a 30-foot standard container in the width direction Y, that is, the width of the container body 111 is the same as the width of the 30-foot standard container.

In some other embodiments, dimensions of the container body 111 in the length direction X and the height direction Z are less than dimensions of a standard container with a standard size in the length direction X and the height direction Z, and the dimension of the container body 111 in the width direction Y is the same as a dimension of a standard container with another standard size in the width direction Y.

For example, dimensions of the container body 111 in the length direction X and the height direction Z is less than dimensions of a 20-foot standard container in the length direction X and the height direction Z, that is, the length of the container body 111 is less than the length of the 20-foot standard container, and the height of the container body 111 is less than the height of the 20-foot standard container; and the dimension of the container body 111 in the width direction Y is the same as a dimension of a 30-foot standard container in the width direction Y, that is, the width of the container body 111 is the same as the width of the 30-foot standard container.

In still some other embodiments, dimensions of the container body 111 in the length direction X and the height direction Z are less than dimensions of a standard container with a standard size in the length direction X and the height direction Z, and the dimension of the container body 111 in the width direction Y is the same as a dimension of the standard container with the standard size in the width direction Y.

For example, dimensions of the container body 111 in the length direction X and the height direction Z is less than dimensions of a 20-foot standard container in the length direction X and the height direction Z, that is, the length of the container body 111 is less than the length of the 20-foot standard container, and the height of the container body 111 is less than the height of the 20-foot standard container; and the dimension of the container body 111 in the width direction Y is the same as a dimension of the 20-foot standard container in the width direction Y, that is, the width of the container body 111 is the same as the width of the 20-foot standard container.

In yet some other embodiments, the dimension of the container body 111 in the length direction X is less than a dimension of a standard container with a standard size in the length direction X, the dimension of the container body 111 in the width direction Y is the same as a dimension of the standard container with the standard size in the width direction Y, and the dimension of the container body 111 in the height direction Z is less than a dimension of a standard container with another standard size in the height direction Z.

For example, the dimension of the container body 111 in the length direction X is less than a dimension of a 20-foot standard container in the length direction X, that is, the length of the container body 111 is less than the length of the 20-foot standard container; the dimension of the container body 111 in the width direction Y is the same as a dimension of the 20-foot standard container in the width direction Y, that is, the width of the container body 111 is the same as the width of the 20-foot standard container; and the dimension of the container body 111 in the height direction Z is less than a dimension of a 30-foot standard container in the height direction Z, that is, the height of the container body 111 is less than the height of the 30-foot standard container.

In yet some other embodiments, the dimension of the container body 111 in the height direction Z is less than a dimension of a standard container with a standard size in the height direction Z, the dimension of the container body 111 in the width direction Y is the same as a dimension of the standard container with the standard size in the width direction Y, and the dimension of the container body 111 in the length direction X is less than a dimension of a standard container with another standard size in the length direction X.

For example, the dimension of the container body 111 in the height direction Z is less than a dimension of a 20-foot standard container in the height direction Z, that is, the height of the container body 111 is less than the height of the 20-foot standard container; the dimension of the container body 111 in the width direction Y is the same as a dimension of the 20-foot standard container in the width direction Y, that is, the width of the container body 111 is the same as the width of the 20-foot standard container; and the dimension of the container body 111 in the length direction X is less than a dimension of a 30-foot standard container in the length direction X, that is, the length of the container body 111 is less than the length of the 30-foot standard container.

By using the foregoing technical solution, during transportation, a dimension of the energy storage container 110 does not exceed a corresponding dimension of the standard container in the length direction X during ocean transportation or land transportation, which is beneficial to improving the convenience during transportation of the energy storage container 110 and reducing the transportation costs of the energy storage container 110, thereby effectively reducing the use costs of the energy storage device 100.

In some embodiments of the present application, referring to FIG. 3, the energy storage device 100 includes a plurality of energy storage containers 110, m₂ energy storage containers 110 of the plurality of energy storage containers 110 are arranged in a row in the length direction X of the container body 111, and m₃ rows of energy storage containers 110 are stacked in the height direction Z of the container body 111, where m₂ and m₃ are both positive integers greater than or equal to 2.

In some embodiments, the energy storage device 100 includes at least four energy storage containers 110, and a quantity of the energy storage containers 110 in the energy storage device 100 is an integer multiple of 2.

For example, the energy storage device 100 includes four energy storage containers 110. During assembly of the energy storage device 100, every two energy storage containers 110 may be arranged into one row in the length direction X of the container body 111, and then two rows of energy storage containers 110 are stacked in the height direction Z of the container body 111.

For example, the energy storage device 100 includes six energy storage containers 110. During assembly of the energy storage device 100, every two energy storage containers 110 may be arranged into one row in the length direction X of the container body 111, and then three rows of energy storage containers 110 are stacked in the height direction Z of the container body 111.

By using the foregoing technical solution, when the energy storage device 100 occupies the same area, a larger number of energy storage containers 110 can be configured, thereby improving the energy density of the energy storage device 100, and effectively improving the performance of the energy storage device 100.

In some embodiments of the present application, a sum of dimensions of m₂₁ energy storage containers 110 of the m₂ energy storage containers 110 in the length direction X of the container body 111 is equal to a sum of dimensions of n₂ standard containers in the length direction X, n₂ is a positive integer less than m₂₁, a sum of dimensions of m₃₁ rows of energy storage containers 110 of the m₃ rows of energy storage containers 110 in the height direction Z of the container body 111 is equal to a sum of dimensions of n₃ standard containers in the height direction Z, and n₃ is a positive integer less than m₃₁.

The m₂₁ energy storage containers 110 of the m₂ energy storage containers 110 are any m₂₁ energy storage containers 110 of the m₂ energy storage containers 110. For example, the energy storage device 100 includes four energy storage containers 110, which are a first energy storage container, a second energy storage container, a third energy storage container, and a fourth energy storage container. If m₂₁=2, the two energy storage containers 110 may be the first energy storage container and the third energy storage container, or may be the first energy storage container and the second energy storage container, or may be the second energy storage container and the fourth energy storage container.

m₂₁ may be less than m₂, and a sum of dimensions of some energy storage containers 110 of the m₂ energy storage containers 110 in the length direction X is equal to a sum of dimensions of n₂ standard containers in the length direction X. For example, m₂=8, m₂₁=5, and n₂=3. The five energy storage containers 110 may be any five energy storage containers 110 in the eight energy storage containers 110, and a sum of lengths of the five energy storage containers 110 is equal to the length of one standard container.

Alternatively, m₂₁=m₂, and a sum of dimensions of the m₂ energy storage containers 110 in the length direction X is equal to a sum of dimensions of n₂ standard containers in the length direction X. For example, m₂=2, m₂₁=m₂, and n₂=1, and a sum of lengths of two energy storage containers 110 is equal to the length of one standard container.

Dimensions of the energy storage containers 110 in the length direction X may be the same. To be specific, a dimension of the energy storage container 110 in the length direction X may be one m₂₁^{th} a sum of dimensions of n₂ standard containers in the length direction X. In other words, a sum of dimensions of m₂₁ energy storage containers 110 in the length direction X is the sum of the dimensions of n₂ standard containers in the length direction X. In this way, when n₂ is 1, the m₂₁ energy storage containers 110 can form a dimension of one standard container in the length direction X, to be conveniently assembled into a dimension of one standard container for land transportation and ocean transportation; or when n₂ is an integer greater than 1, the m₂₁ energy storage containers 110 can form a dimension of n₂ standard containers in the length direction X, which is also convenient for transportation in the dimension of the standard container. When the energy storage containers form the dimension of the standard container for transportation, transportation costs can be greatly reduced.

Optionally, dimensions of the m₂₁ energy storage containers 110 in the length direction X may alternatively be different, but at least a sum of the dimensions of the m₂₁ energy storage containers 110 in the length direction X needs to be set to a dimension of n₂ standard containers in the length direction X. In this way, the m₂₁ energy storage containers 110 with different dimensions in the length direction X may also be assembled into a dimension of one or more standard containers in the length direction X, to greatly facilitate transportation and reduce the transportation costs.

In the embodiments of the present application, the sum of the dimensions of the m₂₁ energy storage containers 110 in the length direction X being equal to a sum of dimensions of the n₂ standard containers in the length direction X means that the sum of the dimensions of the m₂₁ energy storage containers 110 in the length direction X is approximately equal to the sum of the dimensions of the n₂ standard containers in the length direction X. When a dimension difference between the sum of the dimensions of the m₂₁ energy storage containers 110 in the length direction X and the sum of the dimensions of the n₂ standard containers in the length direction X is within the foregoing tolerance range, it may be considered that the dimensions are approximately equal.

Optionally, due to a manufacturing error, there may be m₂₁ manufacturing errors W₃ in the sum of the dimensions of the m₂₁ energy storage containers 110 in the length direction X, where W₃≤5 mm. In other words, that the sum of the dimensions of the m₂₁ energy storage containers 110 in the length direction X is equal to the sum of the dimensions of the n₂ standard containers in the length direction X may alternatively mean that the sum of the dimensions of the m₂₁ energy storage containers 110 in the length direction X plus m₂₁×W₃ is equal to the sum of the dimensions of the n₂ standard containers in the length direction X.

For example, m₂₁=2, n₂=1, and the length l of the energy storage container 110 is 3027 mm. A length L of a corresponding standard container is 6058 mm, n₂×L-m₂₁×l=4 mm, and 4 mm<m₂₁×W₃=10 mm. Therefore, the sum of the dimensions of the m₂₁ energy storage containers 110 in the length direction X is equal to the sum of the dimensions of the n₂ standard containers in the length direction X.

The m₃₁ rows of energy storage containers 110 of the m₃ rows of energy storage containers 110 are any m₃₁ rows of energy storage containers 110 of the m₃ rows of energy storage containers 110. For example, the energy storage device 100 includes eight energy storage containers 110, every two energy storage containers 110 are arranged into one row in the length direction X, and four rows of energy storage containers 110 are stacked in the height direction Z. If m₃₁=2, the two rows of energy storage containers 110 may be energy storage containers 110 in the first row and the second row, or may be energy storage containers 110 in the first row and the third row, or may be energy storage containers 110 in the second row and the fourth row.

m₃₁ may be less than m₃, and a sum of dimensions of some rows of energy storage containers 110 of the m₃ rows of energy storage containers 110 in the height direction Z is equal to a sum of dimensions of n₃ standard containers in the height direction Z. For example, m₃=8, m₃₁=5, and n₃=3. The five rows of energy storage containers 110 may be any five rows of energy storage containers 110 in the eight rows of energy storage containers 110, and a sum of heights of the five rows of energy storage containers 110 is equal to the height of one standard container.

Alternatively, m₃₁=m₃, and a sum of dimensions of the m₃ energy storage containers 110 in the height direction Z is equal to a sum of dimensions of n₃ standard containers in the height direction Z. For example, m₃=2, m₃₁=m₃, and n₃=1, and a sum of heights of two rows of energy storage containers 110 is equal to the height of one standard container.

Dimensions of the m₃₁ rows of energy storage containers 110 in the height direction Z may be the same. To be specific, a dimension of one row of energy storage containers 110 in the height direction Z may be one m₃₁^{th} a sum of dimensions of n₃ standard containers in the height direction Z. In other words, a sum of dimensions of m₃₁ rows of energy storage containers 110 in the height direction Z is the sum of the dimensions of n₃ standard containers in the height direction Z. In this way, when n₃ is 1, the m₃₁ rows of energy storage containers 110 can form a dimension of one standard container in the height direction Z, to be conveniently assembled into a dimension of one standard container for land transportation and ocean transportation; or when n₃ is an integer greater than 1, the m₃₁ rows of energy storage containers 110 can form a dimension of n₃ standard containers in the height direction Z, which is also convenient for transportation in the dimension of the standard container. When the energy storage containers form the dimension of the standard container for transportation, transportation costs can be greatly reduced.

Optionally, dimensions of the m₃₁ rows of energy storage containers 110 in the height direction Z may alternatively be different, but at least a sum of the dimensions of the m₃₁ rows of energy storage containers 110 in the height direction Z needs to be set to a dimension of n₃ standard containers in the height direction Z. In this way, the m₃₁ rows of energy storage containers 110 with different dimensions in the height direction Z may also be assembled into a dimension of one or more standard containers in the height direction Z, to greatly facilitate transportation and reduce the transportation costs.

In the embodiments of the present application, the sum of the dimensions of the m₃₁ rows of energy storage containers 110 in the height direction Z being equal to a sum of dimensions of the n₃ standard containers in the height direction Z means that the sum of the dimensions of the m₃₁ rows of energy storage containers 110 in the height direction Z is approximately equal to the sum of the dimensions of the n₃ standard containers in the height direction Z. When a dimension difference between the sum of the dimensions of the m₃₁ rows of energy storage containers 110 in the height direction Z and the sum of the dimensions of the n₃ standard containers in the height direction Z is within the foregoing tolerance range, it may be considered that the dimensions are approximately equal.

Optionally, due to a manufacturing error, there may be m₃₁ manufacturing errors W₁ in the sum of the dimensions of the m₃₁ rows of energy storage containers 110 in the height direction Z, where W₁≤5 mm. In other words, that the sum of the dimensions of the m₃₁ rows of energy storage containers 110 in the height direction Z is equal to the sum of the dimensions of the n₃ standard containers in the height direction Z may alternatively mean that the sum of the dimensions of the m₃₁ rows of energy storage containers 110 in the height direction Z plus m₃₁×W₁ is equal to the sum of the dimensions of the n₃ standard containers in the height direction Z.

For example, m₃₁=2, n₃=1, and the height h of the energy storage container 110 is 1293 mm. A height H of a corresponding standard container is 2591 mm, n₃×H-m₃₁×h=5 mm, and 5 mm<m₃₁×W₁=10 mm. Therefore, the sum of the dimensions of the m₃₁ rows of energy storage containers 110 in the height direction Z is equal to the sum of the dimensions of the n₃ standard containers in the height direction Z.

By using the foregoing technical solution, the dimensions of the m₂₁ energy storage containers 110 in the length direction X of the container body 111 are the dimensions of the n₂ standard containers in the length direction X, and the dimensions of the m₃₁ rows of energy storage containers 110 in the height direction Z of the container body 111 are the dimensions of the n₃ standard containers in the height direction Z, so that space occupied by the plurality of energy storage containers 110 when stacked is the same as space occupied by at least one standard container, thereby improving the utilization of the space for placing the energy storage containers 110, which is beneficial to fully using length space and height space during transportation, reducing the space waste during transportation of the energy storage containers 110, and reducing the transportation costs of the energy storage containers 110, thereby further reducing the use costs of the energy storage device 100.

In some embodiments of the present application, m₂₁=2, n₂=1, m₃₁=2, and n₃=1.

By using the foregoing technical solution, when a plurality of energy storage containers 110 in the energy storage device 100 are transported, not only can a certain quantity of energy storage containers 110 be arranged in the length direction X of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₂₁=2, n₂=1, m₃₁=3, and n₃=1.

By using the foregoing technical solution, when a plurality of energy storage containers 110 in the energy storage device 100 are transported, not only can a certain quantity of energy storage containers 110 be arranged in the length direction X of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₂₁=2, n₂=1, m₃₁=3, and n₃=2.

By using the foregoing technical solution, when a plurality of energy storage containers 110 in the energy storage device 100 are transported, not only can a certain quantity of energy storage containers 110 be arranged in the length direction X of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₂₁=3, n₂=1, m₃₁=2, and n₃=1.

By using the foregoing technical solution, when a plurality of energy storage containers 110 in the energy storage device 100 are transported, not only can a certain quantity of energy storage containers 110 be arranged in the length direction X of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₂₁=3, n₂=1, m₃₁=3, and n₃=1.

By using the foregoing technical solution, when a plurality of energy storage containers 110 in the energy storage device 100 are transported, not only can a certain quantity of energy storage containers 110 be arranged in the length direction X of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₂₁=3, n₂=1, m₃₁=3, and n₃=2.

By using the foregoing technical solution, when a plurality of energy storage containers 110 in the energy storage device 100 are transported, not only can a certain quantity of energy storage containers 110 be arranged in the length direction X of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₂₁=3, n₂=2, m₃₁=2, and n₃=1.

By using the foregoing technical solution, when a plurality of energy storage containers 110 in the energy storage device 100 are transported, not only can a certain quantity of energy storage containers 110 be arranged in the length direction X of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₂₁=3, n₂=2, m₃₁=3, and n₃=1.

By using the foregoing technical solution, when a plurality of energy storage containers 110 in the energy storage device 100 are transported, not only can a certain quantity of energy storage containers 110 be arranged in the length direction X of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₂₁=3, n₂=2, m₃₁=3, and n₃=2.

By using the foregoing technical solution, when a plurality of energy storage containers 110 in the energy storage device 100 are transported, not only can a certain quantity of energy storage containers 110 be arranged in the length direction X of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, referring to FIG. 3, the plurality of energy storage containers 110 include a third energy storage container and a fourth energy storage container arranged in the length direction X of the container body 111, a third connection portion 1115 is provided on a side of the container body 111 of the third energy storage container facing the fourth energy storage container, a fourth connection portion 1116 is provided on a side of the container body 111 of the fourth energy storage container facing the third energy storage container, and the third connection portion 1115 is connected to the fourth connection portion 1116.

The third connection portion 1115 and the fourth connection portion 1116 cooperate to form at least a part of a second connection structure used for connecting two energy storage containers 110 adjacent in the length direction X. A connection manner between the third connection portion 1115 and the fourth connection portion 1116 may be, but is not limited to, welding, clamping, threaded connection, or the like.

Two energy storage containers 110 assembled in the length direction X for transportation are connected and fixed by using the foregoing second connection structure. Then, a dimension in the length direction X of the n₂ standard containers formed by the m₂₁ energy storage containers 110 in the length direction X further includes dimensions in the length direction X of second connection structures between the m₁₁ energy storage containers 110. In other words, when the second connection structure is provided, a dimension of each of some energy storage containers 110 of the m₂₁ energy storage containers 110 in the length direction X may be a sum of a length of the energy storage container 110 and a dimension in the length direction X of a second connection structure connected to the energy storage container 110. The second connection structure connecting the energy storage containers 110 in the length direction X also occupies the length dimension of the energy storage containers 110 to some extent.

For example, when the m₂₁ energy storage containers 110 are assembled and fixed for transportation by using the second connection structure, a total of a sum of dimensions of the m₂₁ energy storage containers 110 in the length direction X and a sum of dimensions of m₂₁-1 second connection structures in the length direction X is equal to a sum of dimensions of the n₂ standard containers in the length direction X. Optionally, a quantity of second connection structures in the m₂₁ energy storage containers 110 may be less than m₂₁-1, and when these energy storage containers 110 are assembled into a dimension of a standard container, the dimension includes a sum of dimensions of the m₂₁ energy storage containers 110 in the length direction X and a sum of dimensions of actual second connection structures in the length direction X.

For example, the dimension of the second connection structure in the length direction X is W₄, and W₄≤30 mm. For example, m₂₁=3, n₂=2, and lengths 1 of the energy storage containers 110 are all 4020 mm. A length L of a corresponding standard container is 6058 mm, n₂×L-m₂₁×l=56 mm, and 56 mm<m₂₁×W₃+(m₂₁-l)×W₄=75 mm. Therefore, the sum of the dimensions of the m₂₁ energy storage containers 110 in the length direction X is equal to the sum of the dimensions of the n₂ standard containers in the length direction X.

Therefore, for the energy storage device 100 in the embodiments of the present application, when second connection structures are used during transportation, but the second connection structures are not needed between the energy storage containers 110 forming the energy storage device 100, that "the sum of the dimensions of the m₂₁ energy storage containers 110 in the length direction X of the container body 111 is equal to the sum of the dimensions of the n₂ standard containers in the length direction X" should be understood as including dimensions of used second connection structures in the length direction X. In other words, the sum of the dimensions of the m₂₁ energy storage containers 110 in the length direction X is equal to the sum of the dimensions of the n₂ standard containers in the length direction X minus a sum of the dimensions of the used second connection structures in the length direction X. Such a case also belongs to cases of embodiments corresponding to claims 10 to 12 according to the present application.

For example, the third connection portion 1115 may be a third locking hole, the fourth connection portion 1116 may be a third locking member, and the third locking member is locked in the third locking hole.

For example, the third connection portion 1115 may be a fourth locking member, the fourth connection portion 1116 may be a fourth locking hole, and the fourth locking member is locked in the fourth locking hole.

For example, the third connection portion 1115 may be a third locking hole, the fourth connection portion 1116 may be a fourth locking hole, the second connection structure further includes a second connection member, where one end of the second connection member in the length direction X of the container body 111 is connected in the third locking hole, and the other end of the second connection member in the length direction X of the container body 111 is connected in the third locking hole.

By using the foregoing technical solution, a structure of the plurality of energy storage containers 110 being stacked become more stable, thereby effectively improving transportation safety of the energy storage containers 110 and use safety of the energy storage device 100.

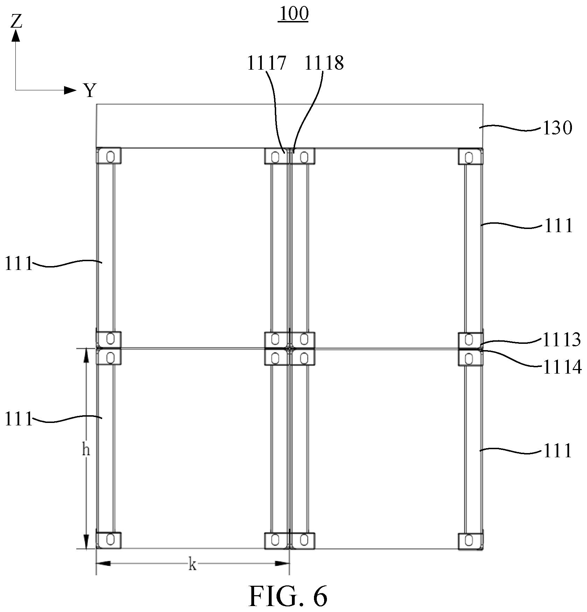

In some embodiments of the present application, referring to FIG. 6, the second direction is a width direction Y of the container body 111, and a dimension of the container body 111 in a length direction X is the same as a dimension of the standard container in the length direction X.

The dimension of the container body 111 in the length direction X is the same as the dimension of the standard container in the length direction X. This does not mean that the length of the container body 111 and the length of the standard container are exactly the same, but there may be an error within an error tolerance range between the two. For example, with reference to GB/T 1413-2008 and GB/T 1413-2023, a difference between the dimension of the container body 111 in the length direction X and the dimension of the standard container in the length direction X is within a range of ±10 mm.

It should be noted that in an actual application, the dimension of the container body 111 in the length direction X, the dimension of the container body 111 in the height direction Z, and the dimension of the container body 111 in the width direction Y may correspond to dimensions of standard containers of the same standard size, or may correspond to dimensions of standard containers of different standard sizes.

In some embodiments, the dimension of the container body 111 in the width direction Y is less than a dimension of a standard container with a standard size in the width direction Y, the dimension of the container body 111 in the height direction Z is less than a dimension of a standard container with another standard size in the height direction Z, and the dimension of the container body 111 in the length direction X is the same as a dimension of a standard container with still another standard size in the length direction X.

For example, the dimension of the container body 111 in the width direction Y is less than a dimension of a 10-foot standard container in the width direction Y, that is, the width of the container body 111 is less than the width of the 10-foot standard container; the dimension of the container body 111 in the height direction Z is less than a dimension of a 20-foot standard container in the height direction Z, that is, the height of the container body 111 is less than the height of the 20-foot standard container; and the dimension of the container body 111 in the length direction X is the same as a dimension of a 30-foot standard container in the length direction X, that is, the length of the container body 111 is the same as the length of the 30-foot standard container.

In some other embodiments, dimensions of the container body 111 in the width direction Y and the height direction Z are less than dimensions of a standard container with a standard size in the width direction Y and the height direction Z, and the dimension of the container body 111 in the length direction X is the same as a dimension of a standard container with another standard size in the length direction X.

For example, dimensions of the container body 111 in the width direction Y and the height direction Z is less than dimensions of a 20-foot standard container in the width direction Y and the height direction Z, that is, the width of the container body 111 is less than the width of the 20-foot standard container, and the height of the container body 111 is less than the height of the 20-foot standard container; and the dimension of the container body 111 in the length direction X is the same as a dimension of a 30-foot standard container in the length direction X, that is, the length of the container body 111 is the same as the length of the 30-foot standard container.

In still some other embodiments, dimensions of the container body 111 in the width direction Y and the height direction Z are less than dimensions of a standard container with a standard size in the width direction Y and the height direction Z, and the dimension of the container body 111 in the length direction X is the same as a dimension of the standard container with the standard size in the length direction X.

For example, dimensions of the container body 111 in the width direction Y and the height direction Z is less than dimensions of a 20-foot standard container in the width direction Y and the height direction Z, that is, the width of the container body 111 is less than the width of the 20-foot standard container, and the height of the container body 111 is less than the height of the 20-foot standard container; and the dimension of the container body 111 in the length direction X is the same as a dimension of the 20-foot standard container in the length direction X, that is, the length of the container body 111 is the same as the length of the 20-foot standard container.

In yet some other embodiments, the dimension of the container body 111 in the width direction Y is less than a dimension of a standard container with a standard size in the width direction Y, the dimension of the container body 111 in the length direction X is the same as a dimension of the standard container with the standard size in the length direction X, and the dimension of the container body 111 in the height direction Z is less than a dimension of a standard container with another standard size in the height direction Z.

For example, the dimension of the container body 111 in the width direction Y is less than a dimension of a 20-foot standard container in the width direction Y, that is, the width of the container body 111 is less than the width of the 20-foot standard container; the dimension of the container body 111 in the length direction X is the same as a dimension of the 20-foot standard container in the length direction X, that is, the length of the container body 111 is the same as the length of the 20-foot standard container; and the dimension of the container body 111 in the height direction Z is less than a dimension of a 30-foot standard container in the height direction Z, that is, the height of the container body 111 is less than the height of the 30-foot standard container.

In yet some other embodiments, the dimension of the container body 111 in the height direction Z is less than a dimension of a standard container with a standard size in the height direction Z, the dimension of the container body 111 in the length direction X is the same as a dimension of the standard container with the standard size in the length direction X, and the dimension of the container body 111 in the width direction Y is less than a dimension of a standard container with another standard size in the width direction Y.

For example, the dimension of the container body 111 in the height direction Z is less than a dimension of a 20-foot standard container in the height direction Z, that is, the height of the container body 111 is less than the height of the 20-foot standard container; the dimension of the container body 111 in the length direction X is the same as a dimension of the 20-foot standard container in the length direction X, that is, the length of the container body 111 is the same as the length of the 20-foot standard container; and the dimension of the container body 111 in the width direction Y is less than a dimension of a 30-foot standard container in the width direction Y, that is, the width of the container body 111 is less than the width of the 30-foot standard container.

By using the foregoing technical solution, during transportation, a dimension of the energy storage container 110 does not exceed a corresponding dimension of the standard container in the width direction Y during ocean transportation or land transportation, which is more beneficial to improving the convenience during transportation of the energy storage container 110 and further reducing the transportation costs of the energy storage container 110, thereby further reducing the use costs of the energy storage device 100.

In some embodiments of the present application, referring to FIG. 6, the energy storage device 100 includes a plurality of energy storage containers 110, m₄ energy storage containers 110 of the plurality of energy storage containers 110 are arranged in a column in the width direction Y of the container body 111, and m₅ columns of energy storage containers 110 are stacked in the height direction Z of the container body 111, where m₄ and m₅ are both positive integers greater than or equal to 2.

In some embodiments, the energy storage device 100 includes at least four energy storage containers 110, and a quantity of the energy storage containers 110 in the energy storage device 100 is an integer multiple of 2.

For example, the energy storage device 100 includes four energy storage containers 110. During assembly of the energy storage device 100, every two energy storage containers 110 may be arranged into one column in the width direction Y of the container body 111, and then two columns of energy storage containers 110 are stacked in the height direction Z of the container body 111.

For example, the energy storage device 100 includes six energy storage containers 110. During assembly of the energy storage device 100, every two energy storage containers 110 may be arranged into one column in the width direction Y of the container body 111, and then three columns of energy storage containers 110 are stacked in the height direction Z of the container body 111.

By using the foregoing technical solution, when the energy storage device 100 occupies the same area, a larger number of energy storage containers 110 can be configured, thereby improving the energy density of the energy storage device 100, and effectively improving the performance of the energy storage device 100.

In some embodiments of the present application, referring to FIG. 6, a sum of dimensions of m₄₁ energy storage containers 110 of the m₄ energy storage containers 110 in the width direction Y of the container body 111 is equal to a sum of dimensions of n₄ standard containers in the width direction Y, n₄ is a positive integer less than m₄₁, a sum of dimensions of m₅₁ columns of energy storage containers 110 of the m₅ columns of energy storage containers 110 in the height direction Z of the container body 111 is equal to a sum of dimensions of n₅ standard containers in the height direction Z, and n₅ is a positive integer less than m₅₁.

The m₄₁ energy storage containers 110 of the m₄ energy storage containers 110 are any m₄₁ energy storage containers 110 of the m₄ energy storage containers 110. For example, the energy storage device 100 includes four energy storage containers 110, which are a first energy storage container, a second energy storage container, a third energy storage container, and a fourth energy storage container. If m₄₁=2, the two energy storage containers 110 may be the first energy storage container and the third energy storage container, or may be the first energy storage container and the second energy storage container, or may be the second energy storage container and the fourth energy storage container.

m₄₁ may be less than m₄, and a sum of dimensions of some energy storage containers 110 of the m₄ energy storage containers 110 in the width direction Y is equal to a sum of dimensions of n₄ standard containers in the width direction Y. For example, m₄=8, m₄₁=5, and n₄=3. The five energy storage containers 110 may be any five energy storage containers 110 in the eight energy storage containers 110, and a sum of widths of the five energy storage containers 110 is equal to the width of one standard container.

Alternatively, m₄₁=m₄, and a sum of dimensions of the m₄ energy storage containers 110 in the width direction Y is equal to a sum of dimensions of n₄ standard containers in the width direction Y. For example, m₄=2, m₄₁=m₄, and n₄=1, and a sum of widths of two energy storage containers 110 is equal to the width of one standard container.

Dimensions of the energy storage containers 110 in the width direction Y may be the same. To be specific, a dimension of the energy storage container 110 in the width direction Y may be one m₄₁^{th} a sum of dimensions of n₄ standard containers in the width direction Y. In other words, a sum of dimensions of m₄₁ energy storage containers 110 in the width direction Y is the sum of the dimensions of n₄ standard containers in the width direction Y. In this way, when n₄ is 1, the m₄₁ energy storage containers 110 can form a dimension of one standard container in the width direction Y, to be conveniently assembled into a dimension of one standard container for land transportation and ocean transportation; or when n₄ is an integer greater than 1, the m₄₁ energy storage containers 110 can form a dimension of n₄ standard containers in the width direction Y, which is also convenient for transportation in the dimension of the standard container. When the energy storage containers form the dimension of the standard container for transportation, transportation costs can be greatly reduced.

Optionally, dimensions of the m₄₁ energy storage containers 110 in the width direction Y may alternatively be different, but at least a sum of the dimensions of the m₄₁ energy storage containers 110 in the width direction Y needs to be set to a dimension of n₄ standard containers in the width direction Y. In this way, the m₄₁ energy storage containers 110 with different dimensions in the width direction Y may also be assembled into a dimension of one or more standard containers in the width direction Y, to greatly facilitate transportation and reduce the transportation costs.

In the embodiments of the present application, the sum of the dimensions of the m₄₁ energy storage containers 110 in the width direction Y being equal to a sum of dimensions of the n₄ standard containers in the width direction Y means that the sum of the dimensions of the m₄₁ energy storage containers 110 in the width direction Y is approximately equal to the sum of the dimensions of the n₄ standard containers in the width direction Y. When a dimension difference between the sum of the dimensions of the m₄₁ energy storage containers 110 in the width direction Y and the sum of the dimensions of the n₄ standard containers in the width direction Y is within the foregoing tolerance range, it may be considered that the dimensions are approximately equal.

Optionally, due to a manufacturing error, there may be m₄₁ manufacturing errors W₅ in the sum of the dimensions of the m₄₁ energy storage containers 110 in the width direction Y, where W₅≤5 mm. In other words, that the sum of the dimensions of the m₄₁ energy storage containers 110 in the width direction Y is equal to the sum of the dimensions of the n₄ standard containers in the width direction Y may alternatively mean that the sum of the dimensions of the m₄₁ energy storage containers 110 in the width direction Y plus m₄₁×W₅ is equal to the sum of the dimensions of the n₄ standard containers in the width direction Y.

For example, m₄₁=2, n₄=1, and the width k of the energy storage container 110 is 1215 mm. A width K of a corresponding standard container is 2438 mm, n₄×K-m₄₁×k=8 mm, and 8 mm<m₄₁×W₅=10 mm. Therefore, the sum of the dimensions of the m₄₁ energy storage containers 110 in the width direction Y is equal to the sum of the dimensions of the n₄ standard containers in the width direction Y.

The m₅₁ columns of energy storage containers 110 of the m₅ columns of energy storage containers 110 are any m₅₁ columns of energy storage containers 110 of the m₅ columns of energy storage containers 110. For example, the energy storage device 100 includes eight energy storage containers 110, every two energy storage containers 110 are arranged into one column in the width direction Y, and four columns of energy storage containers 110 are stacked in the height direction Z. If m₅₁=2, the two columns of energy storage containers 110 may be the first column and the second column, or may be the first column and the third column, or may be the second column and the fourth column.

m₅₁ may be less than m₅, and a sum of dimensions of some columns of energy storage containers 110 of the m₅ columns of energy storage containers 110 in the height direction Z is equal to a sum of dimensions of n₅ standard containers in the height direction Z. For example, m₅=8, m₅₁=5, and n₅=3. The five columns of energy storage containers 110 may be any five columns of energy storage containers 110 in the eight columns of energy storage containers 110, and a sum of heights of the five columns of energy storage containers 110 is equal to the height of one standard container.

Alternatively, m₅₁=m₅, and a sum of dimensions of the m₅ energy storage containers 110 in the height direction Z is equal to a sum of dimensions of n₅ standard containers in the height direction Z. For example, m₅=2, m₅₁=m₅, and n₅=1, and a sum of heights of two columns of energy storage containers 110 is equal to the height of one standard container.

Dimensions of the m₅₁ columns of energy storage containers 110 in the height direction Z may be the same. To be specific, a dimension of one columns of energy storage containers 110 in the height direction Z may be one m₅₁^{th} a sum of dimensions of n₅ standard containers in the height direction Z. In other words, a sum of dimensions of m₅₁ columns of energy storage containers 110 in the height direction Z is the sum of the dimensions of n₅ standard containers in the height direction Z. In this way, when n₅ is 1, the m₅₁ columns of energy storage containers 110 can form a dimension of one standard container in the height direction Z, to be conveniently assembled into a dimension of one standard container for land transportation and ocean transportation; or when n₅ is an integer greater than 1, the m₅₁ columns of energy storage containers 110 can form a dimension of n₅ standard containers in the height direction Z, which is also convenient for transportation in the dimension of the standard container. When the energy storage containers form the dimension of the standard container for transportation, transportation costs can be greatly reduced.

Optionally, dimensions of the m₅₁ columns of energy storage containers 110 in the height direction Z may alternatively be different, but at least a sum of the dimensions of the m₅₁ columns of energy storage containers 110 in the height direction Z needs to be set to a dimension of n₅ standard containers in the height direction Z. In this way, the m₅₁ columns of energy storage containers 110 with different dimensions in the height direction Z may also be assembled into a dimension of one or more standard containers in the height direction Z, to greatly facilitate transportation and reduce the transportation costs.

In the embodiments of the present application, the sum of the dimensions of the m₅₁ columns of energy storage containers 110 in the height direction Z being equal to a sum of dimensions of the n₅ standard containers in the height direction Z means that the sum of the dimensions of the m₅₁ columns of energy storage containers 110 in the height direction Z is approximately equal to the sum of the dimensions of the n₅ standard containers in the height direction Z. When a dimension difference between the sum of the dimensions of the m₅₁ columns of energy storage containers 110 in the height direction Z and the sum of the dimensions of the n₅ standard containers in the height direction Z is within the foregoing tolerance range, it may be considered that the dimensions are approximately equal.

Optionally, due to a manufacturing error, there may be m₅₁ manufacturing errors W₁ in the sum of the dimensions of the m₅₁ columns of energy storage containers 110 in the height direction Z, where W₁≤5 mm. In other words, that the sum of the dimensions of the m₅₁ columns of energy storage containers 110 in the height direction Z is equal to the sum of the dimensions of the n₅ standard containers in the height direction Z may alternatively mean that the sum of the dimensions of the m₅₁ columns of energy storage containers 110 in the height direction Z plus m₅₁×W₁ is equal to the sum of the dimensions of the n₅ standard containers in the height direction Z.

For example, m₅₁=2, n₅=1, and the height h of the energy storage container 110 is 1293 mm. A height H of a corresponding standard container is 2591 mm, n₅×H-m₅₁×h=5 mm, and 5 mm<m₅₁×W₁=10 mm. Therefore, the sum of the dimensions of the m₅₁ columns of energy storage containers 110 in the height direction Z is equal to the sum of the dimensions of the n₅ standard containers in the height direction Z.

By using the foregoing technical solution, the dimensions of the m₄₁ energy storage containers 110 in the width direction Y of the container body 111 are the dimensions of the n₄ standard containers in the width direction Y, and the dimensions of the m₅₁ columns of energy storage containers 110 in the height direction Z of the container body 111 are the dimensions of the n₅ standard containers in the height direction Z, so that space occupied by the plurality of energy storage containers 110 when stacked is the same as space occupied by at least one standard container, thereby improving the utilization of the space for placing the energy storage containers 110, which is beneficial to fully using length space and height space during transportation, reducing the space waste during transportation of the energy storage containers 110, and reducing the transportation costs of the energy storage containers 110, thereby further reducing the use costs of the energy storage device 100.

In some embodiments of the present application, m₄₁=2, n₄=1, m₅₁=2, and n₅=1.

By using the foregoing technical solution, when a plurality of energy storage containers 110 in the energy storage device 100 are transported, not only can a certain quantity of energy storage containers 110 be arranged in the width direction Y of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₄₁=2, n₄=1, m₅₁=3, and n₅=1.

By using the foregoing technical solution, when a plurality of energy storage containers 110 in the energy storage device 100 are transported, not only can a certain quantity of energy storage containers 110 be arranged in the width direction Y of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₄₁=2, n₄=1, m₅₁=3, and n₅=2.

By using the foregoing technical solution, when a plurality of energy storage containers 110 in the energy storage device 100 are transported, not only can a certain quantity of energy storage containers 110 be arranged in the width direction Y of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₄₁=3, n₄=1, m₅₁=2, and n₅=1.

By using the foregoing technical solution, when a plurality of energy storage containers 110 in the energy storage device 100 are transported, not only can a certain quantity of energy storage containers 110 be arranged in the width direction Y of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₄₁=3, n₄=1, m₅₁=3, and n₅=1.

By using the foregoing technical solution, when a plurality of energy storage containers 110 in the energy storage device 100 are transported, not only can a certain quantity of energy storage containers 110 be arranged in the width direction Y of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₄₁=3, n₄=1, m₅₁=3, and n₅=2.

By using the foregoing technical solution, when a plurality of energy storage containers 110 in the energy storage device 100 are transported, not only can a certain quantity of energy storage containers 110 be arranged in the width direction Y of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₄₁=3, n₄=2, m₅₁=2, and n₅=1.

By using the foregoing technical solution, when a plurality of energy storage containers 110 in the energy storage device 100 are transported, not only can a certain quantity of energy storage containers 110 be arranged in the width direction Y of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₄₁=3, n₄=2, m₅₁=3, and n₅=1.

By using the foregoing technical solution, when a plurality of energy storage containers 110 in the energy storage device 100 are transported, not only can a certain quantity of energy storage containers 110 be arranged in the width direction Y of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, m₄₁=3, n₄=2, m₅₁=3, and n₅=2.

By using the foregoing technical solution, when a plurality of energy storage containers 110 in the energy storage device 100 are transported, not only can a certain quantity of energy storage containers 110 be arranged in the width direction Y of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, referring to FIG. 6, the plurality of energy storage containers 110 include a fifth energy storage container and a sixth energy storage container arranged in the width direction Y of the container body 111, a fifth connection portion 1117 is provided on a side of the container body 111 of the fifth energy storage container facing the sixth energy storage container, a sixth connection portion 1118 is provided on a side of the container body 111 of the sixth energy storage container facing the fifth energy storage container, and the fifth connection portion 1117 is connected to the sixth connection portion 1118.

The fifth connection portion 1117 and the sixth connection portion 1118 cooperate to form at least a part of a third connection structure used for connecting two energy storage containers 110 adjacent in the width direction Y. A connection manner between the fifth connection portion 1117 and the sixth connection portion 1118 may be, but is not limited to, welding, clamping, threaded connection, or the like.

Two energy storage containers 110 assembled in the width direction Y for transportation are connected and fixed by using the foregoing third connection structure. Then, a dimension in the width direction Y of the n₄ standard containers formed by the m₄₁ energy storage containers 110 in the width direction Y further includes dimensions in the width direction Y of third connection structures between the m₄₁ energy storage containers 110. In other words, when the third connection structure is provided, a dimension of each of some energy storage containers 110 of the m₄₁ energy storage containers 110 in the width direction Y may be a sum of a width of the energy storage container 110 and a dimension in the width direction Y of a third connection structure connected to the energy storage container 110. The third connection structure connecting the energy storage containers 110 in the width direction Y also occupies the width dimension of the energy storage containers 110 to some extent.

For example, when the m₄₁ energy storage containers 110 are assembled and fixed for transportation by using the third connection structure, a total of a sum of dimensions of the m₄₁ energy storage containers 110 in the width direction Y and a sum of dimensions of m₄₁-1 third connection structures in the width direction Y is equal to a sum of dimensions of the n₄ standard containers in the width direction Y. Optionally, a quantity of third connection structures in the m₄₁ energy storage containers 110 may be less than m₄₁-1, and when these energy storage containers 110 are assembled into a dimension of a standard container, the dimension includes a sum of dimensions of the m₄₁ energy storage containers 110 in the width direction Y and a sum of dimensions of actual third connection structures in the width direction Y.

For example, the dimension of the third connection structure in the width direction Y is W₆, and W₆≤30 mm. For example, m₄₁=3, n₄=2, and widths k of the energy storage container 110 are all 1605 mm. A width K of a corresponding standard container is 2438 mm, n₄×K-m₄₁×k=57 mm, and 57 mm<m₄₁×W₅+(m₄₁-1)×W₆=75 mm. Therefore, the sum of the dimensions of the m₄₁ energy storage containers 110 in the width direction Y is equal to the sum of the dimensions of the n₄ standard containers in the width direction Y.

Therefore, for the energy storage device 100 in the embodiments of the present application, when third connection structures are used during transportation, but the third connection structures are not needed between the energy storage containers 110 forming the energy storage device 100, that "the sum of the dimensions of the m₄₁ energy storage containers 110 in the width direction Y of the container body 111 is equal to the sum of the dimensions of the n₄ standard containers in the width direction Y" should be understood as including dimensions of used third connection structures in the width direction Y. In other words, the sum of the dimensions of the m₄₁ energy storage containers 110 in the width direction Y is equal to the sum of the dimensions of the n₄ standard containers in the width direction Y minus a sum of the dimensions of the used third connection structures in the width direction Y. Such a case also belongs to cases of embodiments corresponding to claims 15 to 17 according to the present application.

For example, the fifth connection portion 1117 may be a fifth locking hole, the sixth connection portion 1118 may be a fifth locking member, and the fifth locking member is locked in the fifth locking hole.

For example, the fifth connection portion 1117 may be a sixth locking member, the sixth connection portion 1118 may be a sixth locking hole, and the sixth locking member is locked in the sixth locking hole.

For example, the fifth connection portion 1117 may be a fifth locking hole, the sixth connection portion 1118 may be a sixth locking hole, the third connection structure further includes a third connection member, where one end of the third connection member in the width direction Y of the container body 111 is connected in the fifth locking hole, and the other end of the third connection member in the width direction Y of the container body 111 is connected in the sixth locking hole.

By using the foregoing technical solution, during transportation, a dimension of the energy storage container 110 does not exceed a corresponding dimension of the standard container in the length direction X during ocean transportation or land transportation, and does not exceed a corresponding dimension of the standard container in the width direction Y during ocean transportation or land transportation either, which is more beneficial to improving the convenience during transportation of the energy storage container 110 and further reducing the transportation costs of the energy storage container 110, thereby further reducing the use costs of the energy storage device 100.

In some embodiments of the present application, the second direction is a length direction of the container body 111, and a dimension of the container body 111 in a width direction is less than a dimension of the standard container in the width direction.

It should be noted that in an actual application, the dimension of the container body 111 in the length direction X, the dimension of the container body 111 in the height direction Z, and the dimension of the container body 111 in the width direction Y may correspond to dimensions of standard containers of the same standard size, or may correspond to dimensions of standard containers of different standard sizes.

In some embodiments, the dimension of the container body 111 in the length direction X is less than a dimension of a standard container with a standard size in the length direction X, the dimension of the container body 111 in the height direction Z is less than a dimension of a standard container with another standard size in the height direction Z, and the dimension of the container body 111 in the width direction Y is less than a dimension of a standard container with still another standard size in the width direction Y.

For example, the dimension of the container body 111 in the length direction X is less than a dimension of a 10-foot standard container in the length direction X, that is, the length of the container body 111 is less than the length of the 10-foot standard container; the dimension of the container body 111 in the height direction Z is less than a dimension of a 20-foot standard container in the height direction Z, that is, the height of the container body 111 is less than the height of the 20-foot standard container; and the dimension of the container body 111 in the width direction Y is less than a dimension of a 30-foot standard container in the width direction Y, that is, the width of the container body 111 is less than the width of the 30-foot standard container.

In some other embodiments, dimensions of the container body 111 in the length direction X and the height direction Z are less than dimensions of a standard container with a standard size in the length direction X and the height direction Z, and the dimension of the container body 111 in the width direction Y is less than a dimension of a standard container with another standard size in the width direction Y.

For example, dimensions of the container body 111 in the length direction X and the height direction Z is less than dimensions of a 20-foot standard container in the length direction X and the height direction Z, that is, the length of the container body 111 is less than the length of the 20-foot standard container, and the height of the container body 111 is less than the height of the 20-foot standard container; and the dimension of the container body 111 in the width direction Y is less than a dimension of a 30-foot standard container in the width direction Y, that is, the width of the container body 111 is less than the width of the 30-foot standard container.

In still some other embodiments, dimensions of the container body 111 in the length direction X and the height direction Z are less than dimensions of a standard container with a standard size in the length direction X and the height direction Z, and the dimension of the container body 111 in the width direction Y is less than a dimension of the standard container with the standard size in the width direction Y.

For example, dimensions of the container body 111 in the length direction X and the height direction Z is less than dimensions of a 20-foot standard container in the length direction X and the height direction Z, that is, the length of the container body 111 is less than the length of the 20-foot standard container, and the height of the container body 111 is less than the height of the 20-foot standard container; and the dimension of the container body 111 in the width direction Y is less than a dimension of the 20-foot standard container in the width direction Y, that is, the width of the container body 111 is less than the width of the 20-foot standard container.

In yet some other embodiments, the dimension of the container body 111 in the length direction X is less than a dimension of a standard container with a standard size in the length direction X, the dimension of the container body 111 in the width direction Y is less than a dimension of the standard container with the standard size in the width direction Y, and the dimension of the container body 111 in the height direction Z is less than a dimension of a standard container with another standard size in the height direction Z.

For example, the dimension of the container body 111 in the length direction X is less than a dimension of a 20-foot standard container in the length direction X, that is, the length of the container body 111 is less than the length of the 20-foot standard container; the dimension of the container body 111 in the width direction Y is less than a dimension of the 20-foot standard container in the width direction Y, that is, the width of the container body 111 is less than the width of the 20-foot standard container; and the dimension of the container body 111 in the height direction Z is less than a dimension of a 30-foot standard container in the height direction Z, that is, the height of the container body 111 is less than the height of the 30-foot standard container.

In yet some other embodiments, the dimension of the container body 111 in the height direction Z is less than a dimension of a standard container with a standard size in the height direction Z, the dimension of the container body 111 in the width direction Y is less than a dimension of the standard container with the standard size in the width direction Y, and the dimension of the container body 111 in the length direction X is less than a dimension of a standard container with another standard size in the length direction X.

For example, the dimension of the container body 111 in the height direction Z is less than a dimension of a 20-foot standard container in the height direction Z, that is, the height of the container body 111 is less than the height of the 20-foot standard container; the dimension of the container body 111 in the width direction Y is less than a dimension of the 20-foot standard container in the width direction Y, that is, the width of the container body 111 is less than the width of the 20-foot standard container; and the dimension of the container body 111 in the length direction X is less than a dimension of a 30-foot standard container in the length direction X, that is, the length of the container body 111 is less than the length of the 30-foot standard container.

By using the foregoing technical solution, during transportation, a dimension of the energy storage container 110 does not exceed a corresponding dimension of the standard container in the length direction during ocean transportation or land transportation, and does not exceed a corresponding dimension of the standard container in the width direction during ocean transportation or land transportation either, which is more beneficial to improving the convenience during transportation of the energy storage container 110 and further reducing the transportation costs of the energy storage container 110, thereby further reducing the use costs of the energy storage device 100.

In some embodiments of the present application, the energy storage device 100 includes a plurality of energy storage containers 110, m₆ energy storage containers 110 of the plurality of energy storage containers 110 are arranged in the length direction of the container body 111, m₇ rows of energy storage containers 110 are arranged into an array structure in the width direction of the container body 111, and m₈ array structures are stacked in the height direction of the container body 111, where m₆, m₇, and m₈ are all positive integers greater than or equal to 2.

In some embodiments, the energy storage device 100 includes at least eight energy storage containers 110, and a quantity of the energy storage containers 110 in the energy storage device 100 is an integer multiple of 4.

For example, the energy storage device 100 includes eight energy storage containers 110. During assembly of the energy storage device 100, two energy storage containers 110 may be arranged into one row in the length direction X of the container body 111, then two rows of energy storage containers 110 are arranged into an array structure in the width direction Y of the container body 111, and then two array structures of the energy storage containers 110 are stacked in the height direction Z of the container body 111.

For example, the energy storage device 100 includes 12 energy storage containers 110. During assembly of the energy storage device 100, three energy storage containers 110 may be arranged into one row in the length direction X of the container body 111, then two rows of energy storage containers 110 are arranged into an array structure in the width direction Y of the container body 111, and then two array structures of the energy storage containers 110 are stacked in the height direction Z of the container body 111.

By using the foregoing technical solution, when the energy storage device 100 occupies the same area, a larger number of energy storage containers 110 can be configured, further improving the area energy density of the energy storage system 1000, thereby further improving the performance of the energy storage system 1000.

In some embodiments of the present application, a sum of dimensions of m₆₁ energy storage containers 110 of the m₆ energy storage containers 110 in the length direction X of the container body 111 is equal to a sum of dimensions of n₆ standard containers in the length direction X, n₆ is a positive integer less than m₆₁, a sum of dimensions of m₇₁ energy storage containers 110 of the m₇ rows of energy storage containers 110 in the width direction Y of the container body 111 is equal to a sum of dimensions of n₇ standard containers in the width direction Y, n₇ is a positive integer less than m₇₁, a sum of dimensions of m₈₁ array structures of the m₈ array structures in the height direction Z of the container body 111 is equal to a sum of dimensions of n₈ standard containers in the height direction Z, and n₈ is a positive integer less than m₈₁.

The m₆₁ energy storage containers 110 of the m₆ energy storage containers 110 are any m₆₁ energy storage containers 110 of the m₆ energy storage containers 110. For example, the energy storage device 100 includes eight energy storage containers 110, which are a first energy storage container, a second energy storage container, a third energy storage container, a fourth energy storage container, a fifth energy storage container, a sixth energy storage container, a seventh energy storage container, and an eighth energy storage container. If m₆₁=2, the two energy storage containers 110 may be the first energy storage container and the third energy storage container, or may be the second energy storage container and the fourth energy storage container, or may be the fifth energy storage container and the eighth energy storage container.

m₆₁ may be less than m₆, and a sum of dimensions of some energy storage containers 110 of the m₆ energy storage containers 110 in the length direction X is equal to a sum of dimensions of n₆ standard containers in the length direction X. For example, m₆=8, m₆₁=5, and n₆=3. The five energy storage containers 110 may be any five energy storage containers 110 in the eight energy storage containers 110, and a sum of lengths of the five energy storage containers 110 is equal to the length of one standard container.

Alternatively, m₆₁=m₆, and a sum of dimensions of the m₆ energy storage containers 110 in the length direction X is equal to a sum of dimensions of n₆ standard containers in the length direction X. For example, m₆=2, m₆₁=m₆, and n₆=1, and a sum of lengths of two energy storage containers 110 is equal to the length of one standard container.

Dimensions of the energy storage containers 110 in the length direction X may be the same. To be specific, a dimension of the energy storage container 110 in the length direction X may be one m₆₁^{th} a sum of dimensions of n₆ standard containers in the length direction X. In other words, a sum of dimensions of m₆₁ energy storage containers 110 in the length direction X is the sum of the dimensions of n₆ standard containers in the length direction X. In this way, when n₆ is 1, the m₆₁ energy storage containers 110 can form a dimension of one standard container in the length direction X, to be conveniently assembled into a dimension of one standard container for land transportation and ocean transportation; or when n₆ is an integer greater than 1, the m₆₁ energy storage containers 110 can form a dimension of n₆ standard containers in the length direction X, which is also convenient for transportation in the dimension of the standard container. When the energy storage containers form the dimension of the standard container for transportation, transportation costs can be greatly reduced.

Optionally, dimensions of the m₆₁ energy storage containers 110 in the length direction X may alternatively be different, but at least a sum of the dimensions of the m₆₁ energy storage containers 110 in the length direction X needs to be set to a dimension of n₆ standard containers in the length direction X. In this way, the m₆₁ energy storage containers 110 with different dimensions in the length direction X may also be assembled into a dimension of one or more standard containers in the length direction X, to greatly facilitate transportation and reduce the transportation costs.

In the embodiments of the present application, the sum of the dimensions of the m₆₁ energy storage containers 110 in the length direction X being equal to a sum of dimensions of the n₆ standard containers in the length direction X means that the sum of the dimensions of the m₆₁ energy storage containers 110 in the length direction X is approximately equal to the sum of the dimensions of the n₆ standard containers in the length direction X. When a dimension difference between the sum of the dimensions of the m₆₁ energy storage containers 110 in the length direction X and the sum of the dimensions of the n₆ standard containers in the length direction X is within the foregoing tolerance range, it may be considered that the dimensions are approximately equal.

Optionally, due to a manufacturing error, there may be m₆₁ manufacturing errors W₃ in the sum of the dimensions of the m₆₁ energy storage containers 110 in the length direction X, where W₃≤5 mm. In other words, that the sum of the dimensions of the m₆₁ energy storage containers 110 in the length direction X is equal to the sum of the dimensions of the n₆ standard containers in the length direction X may alternatively mean that the sum of the dimensions of the m₆₁ energy storage containers 110 in the length direction X plus m₆₁×W₃ is equal to the sum of the dimensions of the n₆ standard containers in the length direction X.

For example, m₆₁=2, n₆=1, and the length 1 of the energy storage container 110 is 3027 mm. A length L of a corresponding standard container is 6058 mm, n₆×L-m₆₁×l=4 mm, and 4 mm<m₆₁×W₃=10 mm. Therefore, the sum of the dimensions of the m₆₁ energy storage containers 110 in the length direction X is equal to the sum of the dimensions of the n₆ standard containers in the length direction X.

The m₇₁ rows of energy storage containers 110 of the m₇ rows of energy storage containers 110 are any m₇₁ rows of energy storage containers 110 of the m₇ rows of energy storage containers 110. For example, the energy storage device 100 includes four rows of energy storage containers 110. If m₇₁=2, the two rows of energy storage containers 110 may be energy storage containers 110 in the first row and the third row, or may be energy storage containers 110 in the first row and the second row, or may be energy storage containers 110 in the second row and the fourth row.

m₇₁ may be less than m₇, and a sum of dimensions of some energy storage containers 110 of the m₇ rows of energy storage containers 110 in the width direction Y is equal to a sum of dimensions of n₇ standard containers in the width direction Y. For example, m₇=8, m₇₁=5, and n₇=3. The five rows of energy storage containers 110 may be any five rows of energy storage containers 110 in the eight rows of energy storage containers 110, and a sum of widths of the five rows of energy storage containers 110 is equal to the width of one standard container.

Alternatively, m₇₁=m₇, and a sum of dimensions of the m₇ rows of energy storage containers 110 in the width direction Y is equal to a sum of dimensions of n₇ standard containers in the width direction Y. For example, m₇=2, m₇₁=m₇, and n₇=1, and a sum of widths of two rows of energy storage containers 110 is equal to the width of one standard container.

Dimensions of the energy storage containers 110 in the width direction Y may be the same. To be specific, a dimension of the energy storage container 110 in the width direction Y may be one m₇₁^{th} a sum of dimensions of n₇ standard containers in the width direction Y. In other words, a sum of dimensions of m₇₁ rows of energy storage containers 110 in the width direction Y is the sum of the dimensions of n₇ standard containers in the width direction Y. In this way, when n₇ is 1, the m₇₁ rows of energy storage containers 110 can form a dimension of one standard container in the width direction Y, to be conveniently assembled into a dimension of one standard container for land transportation and ocean transportation; or when n₇ is an integer greater than 1, the m₇₁ rows of energy storage containers 110 can form a dimension of n₇ standard containers in the width direction Y, which is also convenient for transportation in the dimension of the standard container. When the energy storage containers form the dimension of the standard container for transportation, transportation costs can be greatly reduced.

Optionally, dimensions of the m₇₁ rows of energy storage containers 110 in the width direction Y may alternatively be different, but at least a sum of the dimensions of the m₇₁ rows of energy storage containers 110 in the width direction Y needs to be set to a dimension of n₇ standard containers in the width direction Y. In this way, the m₇₁ rows of energy storage containers 110 with different dimensions in the width direction Y may also be assembled into a dimension of one or more standard containers in the width direction Y, to greatly facilitate transportation and reduce the transportation costs.

In the embodiments of the present application, the sum of the dimensions of the m₇₁ rows of energy storage containers 110 in the width direction Y being equal to a sum of dimensions of the n₇ standard containers in the width direction Y means that the sum of the dimensions of the m₇₁ rows of energy storage containers 110 in the width direction Y is approximately equal to the sum of the dimensions of the n₇ standard containers in the width direction Y. When a dimension difference between the sum of the dimensions of the m₇₁ rows of energy storage containers 110 in the width direction Y and the sum of the dimensions of the n₇ standard containers in the width direction Y is within the foregoing tolerance range, it may be considered that the dimensions are approximately equal.

Optionally, due to a manufacturing error, there may be m₇₁ manufacturing errors W₅ in the sum of the dimensions of the m₇₁ rows of energy storage containers 110 in the width direction Y, where W₅≤5 mm. In other words, that the sum of the dimensions of the m₇₁ rows of energy storage containers 110 in the width direction Y is equal to the sum of the dimensions of the n₇ standard containers in the width direction Y may alternatively mean that the sum of the dimensions of the m₇₁ rows of energy storage containers 110 in the width direction Y plus m₇₁×W₅ is equal to the sum of the dimensions of the n₇ standard containers in the width direction Y.

For example, m₇₁=2, n₇=1, and the width k of the energy storage container 110 is 1215 mm. A width K of a corresponding standard container is 2438 mm, n₇×K-m₇₁×k=8 mm, and 8 mm<m₇₁×W₅=10 mm. Therefore, the sum of the dimensions of the m₇₁ rows of energy storage containers 110 in the width direction Y is equal to the sum of the dimensions of the n₇ standard containers in the width direction Y.

The m₈₁ array structures of the m₈ array structures refer to any m₈₁ array structures of the m₈ array structures. For example, the energy storage device 100 includes eight array structures, and the eight array structures are stacked in the height direction Z. If m₈₁=2, the two array structures may be a first array structure and a second array structure, may be a first array structure and a third array structure, or may be a second array structure and a fourth array structure.

m₈₁ may be less than m₈, and a sum of dimensions of some array structures of the m₈ array structures in the height direction Z is equal to a sum of dimensions of n₈ standard containers in the height direction Z. For example, m₈=8, m₈₁=5, and n₈=3. The five array structures may be any five array structures in the eight array structures, and a sum of heights of the five array structures is equal to the height of one standard container.

Alternatively, m₈₁=m₈, and a sum of dimensions of the m₈ array structures in the height direction Z is equal to a sum of dimensions of n₈ standard containers in the height direction Z. For example, m₈=2, m₈₁=m₈, and n₈=1, and a sum of heights of two array structures is equal to the height of one standard container.

Dimensions of the m₈₁ array structures in the height direction Z may be the same. To be specific, a dimension of one array structure in the height direction Z may be one m₈₁^{th} a sum of dimensions of n₈ standard containers in the height direction Z. In other words, a sum of dimensions of m₈₁ array structures in the height direction Z is the sum of the dimensions of n₈ standard containers in the height direction Z. In this way, when n₈ is 1, the m₈₁ array structures can form a dimension of one standard container in the height direction Z, to be conveniently assembled into a dimension of one standard container for land transportation and ocean transportation; or when n₈ is an integer greater than 1, the m₈₁ array structures can form a dimension of n₈ standard containers in the height direction Z, which is also convenient for transportation in the dimension of the standard container. When the array structures form the dimension of the standard container for transportation, transportation costs can be greatly reduced.

Optionally, dimensions of the m₈₁ array structures in the height direction Z may alternatively be different, but at least a sum of the dimensions of the m₈₁ array structures in the height direction Z needs to be set to a dimension of n₈ standard containers in the height direction Z. In this way, the m₈₁ array structures with different dimensions in the height direction Z may also be assembled into a dimension of one or more standard containers in the height direction Z, to greatly facilitate transportation and reduce the transportation costs.

In the embodiments of the present application, the sum of the dimensions of the m₈₁ array structures in the height direction Z being equal to a sum of dimensions of the n₈ standard containers in the height direction Z means that the sum of the dimensions of the m₈₁ array structures in the height direction Z is approximately equal to the sum of the dimensions of the n₈ standard containers in the height direction Z. When a dimension difference between the sum of the dimensions of the m₈₁ array structures in the height direction Z and the sum of the dimensions of the n₈ standard containers in the height direction Z is within the foregoing tolerance range, it may be considered that the dimensions are approximately equal.

Optionally, due to a manufacturing error, there may be m₈₁ manufacturing errors W₁ in the sum of the dimensions of the m₈₁ array structures in the height direction Z, where W₁≤5 mm. In other words, that the sum of the dimensions of the m₈₁ array structures in the height direction Z is equal to the sum of the dimensions of the n₈ standard containers in the height direction Z may alternatively mean that the sum of the dimensions of the m₈₁ array structures in the height direction Z plus m₈₁×W₁ is equal to the sum of the dimensions of the n₈ standard containers in the height direction Z.

For example, m₈₁=2, n₈=1, and the height h of the energy storage container 110 is 1293 mm. A height H of a corresponding standard container is 2591 mm, n₃×H-m₃₁×h=5 mm, and 5 mm<m₃₁×W₁=10 mm. Therefore, the sum of the dimensions of the m₈₁ array structures in the height direction Z is equal to the sum of the dimensions of the n₈ standard containers in the height direction Z.

By using the foregoing technical solution, the dimensions of the m₆₁ energy storage containers 110 in the length direction X of the container body 111 are the dimensions of the n₆ standard containers in the length direction X, the dimensions of the m₇₁ energy storage containers 110 in the width direction Y of the container body 111 are the dimensions of the n₇ standard containers in the width direction Y, and the dimensions of the m₈₁ array structures in the height direction Z of the container body 111 are the dimensions of the n₈ standard containers in the height direction Z, so that space occupied by the plurality of energy storage containers 110 when stacked is the same as space occupied by at least one standard container, thereby improving the utilization of the space for placing the energy storage containers 110, which is beneficial to fully using length space, width space, and height space during transportation, reducing the space waste during transportation of the energy storage containers 110, and reducing the transportation costs of the energy storage containers 110, thereby further reducing the use costs of the energy storage device 100.

In some embodiments of the present application, m₆₁=2, n₆=1, m₇₁=2, n₇=1, m₈₁=2, and n₈=1.

In some embodiments of the present application, m₆₁=2, n₆=1, m₇₁=2, n₇=1, m₈₁=3, and n₈=1.

In some embodiments of the present application, m₆₁=2, n₆=1, m₇₁=2, n₇=1, m₈₁=3, and n₈=2.

In some embodiments of the present application, m₆₁=2, n₆=1, m₇₁=3, n₇=1, m₈₁=2, and n₈=1.

In some embodiments of the present application, m₆₁=2, n₆=1, m₇₁=3, n₇=1, m₈₁=3, and n₈=1.

In some embodiments of the present application, m₆₁=2, n₆=1, m₇₁=3, n₇=1, m₈₁=3, and n₈=2.

In some embodiments of the present application, m₆₁=2, n₆=1, m₇₁=3, n₇=2, m₈₁=2, and n₈=1.

In some embodiments of the present application, m₆₁=2, n₆=1, m₇₁=3, n₇=2, m₈₁=3, and n₈=1.

In some embodiments of the present application, m₆₁=2, n₆=1, m₇₁=3, n₇=2, m₈₁=3, and n₈=2.

In some embodiments of the present application, m₆₁=3, n₆=1, m₇₁=2, n₇=1, m₈₁=2, and n₈=1.

In some embodiments of the present application, m₆₁=3, n₆=1, m₇₁=2, n₇=1, m₈₁=3, and n₈=1.

In some embodiments of the present application, m₆₁=3, n₆=1, m₇₁=2, n₇=1, m₈₁=3, and n₈=2.

In some embodiments of the present application, m₆₁=3, n₆=1, m₇₁=3, n₇=1, m₈₁=2, and n₈=1.

In some embodiments of the present application, m₆₁=3, n₆=1, m₇₁=3, n₇=1, m₈₁=3, and n₈=1.

In some embodiments of the present application, m₆₁=3, n₆=1, m₇₁=3, n₇=1, m₈₁=3, and n₈=2.

In some embodiments of the present application, m₆₁=3, n₆=1, m₇₁=3, n₇=2, m₈₁=2, and n₈=1.

In some embodiments of the present application, m₆₁=3, n₆=1, m₇₁=3, n₇=2, m₈₁=3, and n₈=1.

In some embodiments of the present application, m₆₁=3, n₆=1, m₇₁=3, n₇=2, m₈₁=3, and n₈=2.

In some embodiments of the present application, m₆₁=3, n₆=2, m₇₁=2, n₇=1, m₈₁=2, and n₈=1.

In some embodiments of the present application, m₆₁=3, n₆=2, m₇₁=2, n₇=1, m₈₁=3, and n₈=1.

In some embodiments of the present application, m₆₁=3, n₆=2, m₇₁=2, n₇=1, m₈₁=3, and n₈=2.

In some embodiments of the present application, m₆₁=3, n₆=2, m₇₁=3, n₇=1, m₈₁=2, and n₈=1.

In some embodiments of the present application, m₆₁=3, n₆=2, m₇₁=3, n₇=1, m₈₁=3, and n₈=1.

In some embodiments of the present application, m₆₁=3, n₆=2, m₇₁=3, n₇=1, m₈₁=3, and n₈=2.

In some embodiments of the present application, m₆₁=3, n₆=2, m₇₁=3, n₇=2, m₈₁=2, and n₈=1.

In some embodiments of the present application, m₆₁=3, n₆=2, m₇₁=3, n₇=2, m₈₁=3, and n₈=1.

In some embodiments of the present application, m₆₁=3, n₆=2, m₇₁=3, n₇=2, m₈₁=3, and n₈=2.

By using the foregoing technical solution, when a plurality of energy storage containers 110 in the energy storage device 100 are transported, not only can a certain quantity of energy storage containers 110 be arranged in the length direction X and the width direction Y of the container body 111, but a certain quantity of energy storage containers 110 can also be stacked in the height direction Z of the container body 111, so that the certain quantity of energy storage containers 110 can just occupy space that at least one standard container needs to be occupy, thereby improving the utilization of the space for placing the energy storage containers 110, which is beneficial to reducing the transportation costs of the energy storage containers 110.

In some embodiments of the present application, the second direction is a width direction Y of the container body 111, and a dimension of the container body 111 in a length direction X is greater than a dimension of the standard container in the length direction X.

It should be noted that in an actual application, the dimension of the container body 111 in the length direction X, the dimension of the container body 111 in the height direction Z, and the dimension of the container body 111 in the width direction Y may correspond to dimensions of standard containers of the same standard size, or may correspond to dimensions of standard containers of different standard sizes.

In some embodiments, the dimension of the container body 111 in the width direction Y is less than a dimension of a standard container with a standard size in the width direction Y, the dimension of the container body 111 in the height direction Z is less than a dimension of a standard container with another standard size in the height direction Z, and the dimension of the container body 111 in the length direction X is greater than a dimension of a standard container with still another standard size in the length direction X.

For example, the dimension of the container body 111 in the width direction Y is less than a dimension of a 10-foot standard container in the width direction Y, that is, the width of the container body 111 is less than the width of the 10-foot standard container; the dimension of the container body 111 in the height direction Z is less than a dimension of a 20-foot standard container in the height direction Z, that is, the height of the container body 111 is less than the height of the 20-foot standard container; and the dimension of the container body 111 in the length direction X is greater than a dimension of a 30-foot standard container in the length direction X, that is, the length of the container body 111 is greater than the length of the 30-foot standard container.

In some other embodiments, dimensions of the container body 111 in the width direction Y and the height direction Z are less than dimensions of a standard container with a standard size in the width direction Y and the height direction Z, and the dimension of the container body 111 in the length direction X is greater than a dimension of a standard container with another standard size in the length direction X.

For example, dimensions of the container body 111 in the width direction Y and the height direction Z is less than dimensions of a 20-foot standard container in the width direction Y and the height direction Z, that is, the width of the container body 111 is less than the width of the 20-foot standard container, and the height of the container body 111 is less than the height of the 20-foot standard container; and the dimension of the container body 111 in the length direction X is greater than a dimension of a 30-foot standard container in the length direction X, that is, the length of the container body 111 is greater than the length of the 30-foot standard container.

In still some other embodiments, dimensions of the container body 111 in the width direction Y and the height direction Z are less than dimensions of a standard container with a standard size in the width direction Y and the height direction Z, and the dimension of the container body 111 in the length direction X is greater than a dimension of the standard container with the standard size in the length direction X.

For example, dimensions of the container body 111 in the width direction Y and the height direction Z is less than dimensions of a 20-foot standard container in the width direction Y and the height direction Z, that is, the width of the container body 111 is less than the width of the 20-foot standard container, and the height of the container body 111 is less than the height of the 20-foot standard container; and the dimension of the container body 111 in the length direction X is greater than a dimension of the 20-foot standard container in the length direction X, that is, the length of the container body 111 is greater than the length of the 20-foot standard container.

In yet some other embodiments, the dimension of the container body 111 in the width direction Y is less than a dimension of a standard container with a standard size in the width direction Y, the dimension of the container body 111 in the length direction X is greater than a dimension of the standard container with the standard size in the length direction X, and the dimension of the container body 111 in the height direction Z is less than a dimension of a standard container with another standard size in the height direction Z.

For example, the dimension of the container body 111 in the width direction Y is less than a dimension of a 20-foot standard container in the width direction Y, that is, the width of the container body 111 is less than the width of the 20-foot standard container; the dimension of the container body 111 in the length direction X is greater than a dimension of the 20-foot standard container in the length direction X, that is, the length of the container body 111 is greater than the length of the 20-foot standard container; and the dimension of the container body 111 in the height direction Z is less than a dimension of a 30-foot standard container in the height direction Z, that is, the height of the container body 111 is less than the height of the 30-foot standard container.

In yet some other embodiments, the dimension of the container body 111 in the height direction Z is less than a dimension of a standard container with a standard size in the height direction Z, the dimension of the container body 111 in the length direction X is greater than a dimension of the standard container with the standard size in the length direction X, and the dimension of the container body 111 in the width direction Y is the same as a dimension of a standard container with another standard size in the width direction Y.

For example, the dimension of the container body 111 in the height direction Z is less than a dimension of a 20-foot standard container in the height direction Z, that is, the height of the container body 111 is less than the height of the 20-foot standard container; the dimension of the container body 111 in the length direction X is greater than a dimension of the 20-foot standard container in the length direction X, that is, the length of the container body 111 is greater than the length of the 20-foot standard container; and the dimension of the container body 111 in the width direction Y is less than a dimension of a 30-foot standard container in the width direction Y, that is, the width of the container body 111 is less than the width of the 30-foot standard container.

By using the foregoing technical solution, a capacity of the container body 111 can be increased, so that the container body 111 can accommodate more battery modules 112, thereby effectively improving an electric capacity of the energy storage device 100, and effectively improving the performance of the energy storage device 100.

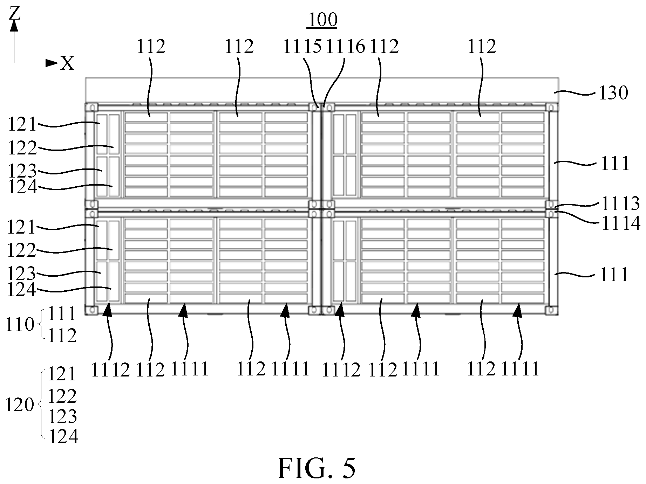

In some embodiments of the present application, referring to FIG. 4 and FIG. 5 together, the energy storage device 100 further includes a control apparatus 120 configured to be electrically connected to the battery modules 112, the container body 111 includes a first compartment 1111 and a second compartment 1112 separated from each other, the battery modules 112 are accommodated in the first compartment 1111, and at least a part of the control apparatus 120 is accommodated in the second compartment 1112.

In some embodiments, the energy storage container 110 further includes a partition plate. The partition plate is arranged in the container body 111, to divide an inner space of the container body 111 into the first compartment 1111 and the second compartment 1112.

In some other embodiments, the first compartment 1111 and the second compartment 1112 are two independent compartments. The first compartment 1111 and the second compartment 1112 are connected to each other to form the container body 111. A connection manner between the first compartment 1111 and the second compartment 1112 may be, but is not limited to, welding, threaded locking connection, clamping, or the like.

By using the foregoing technical solution, a risk of interference between the control apparatus 120 and the battery modules 112 is effectively reduced.

In some embodiments of the present application, referring to FIG. 4 and FIG. 5 together, the control apparatus 120 includes a main control module 121, a general control module 122, a power distribution module 123, and a fire control module 124; the battery modules 112 are electrically connected to the main control module 121; the general control module 121 is electrically connected to the main control module 122; the main control module 121, the general control module 122, and the fire control module 124 are all electrically connected to the power distribution module 123; and at least one of the main control module 121, the general control module 122, the power distribution module 123, and the fire control module 124 is accommodated in the second compartment 1112.

The battery modules 112 are electrically connected to the main control module 121. The main control module 121 is configured to control input and output of high-voltage electric energy of the battery modules 112 in the energy storage container 110. The general control module 122 is electrically connected to the main control module 121. The general control module 122 is configured to control switching actions of the main control module 121 in the energy storage container 110. The fire control module 124 is configured to control actions of a firefighting element when a fire occurs when a temperature of the energy storage container 110 is imbalanced. The firefighting element may be a fire extinguisher or the like, and the firefighting element may be arranged inside the container body 111, or may be arranged outside the container body 111. The power distribution module 123 is configured to electrically connect the main control module 121, the general control module 122, and the fire control module 124, to facilitate circuit conduction between the main control module 121, the general control module 122, and the fire control module 124, and maintain normal operation of the main control module 121, the general control module 122, and the fire control module 124. The main control module 121, the power distribution module 123, the general control module 122, and the fire control module 124 may be all accommodated in the second compartment 1112, or some of the main control module 121, the general control module 122, the power distribution module 123, and the fire control module 124 may be accommodated in the second compartment 1112.

Main control modules 121 may be in a one-to-one correspondence with the energy storage containers 110, and one main control module 121 correspondingly controls input and output of electric energy of battery modules 112 in one energy storage container 110. Alternatively, main control modules 121 may be in a one-to-one correspondence with the battery modules 112, and one main control module 121 correspondingly controls input or output of electric energy of one battery module 112. Alternatively, one main control module 121 may correspondingly control input or output of electric energy of battery modules 112 in a plurality of energy storage containers 110. Alternatively, a plurality of battery modules 112 may be connected in series to form a battery cluster, a plurality of battery clusters are connected in parallel, and one main control module 121 may correspondingly control one or more battery clusters.

In some embodiments, referring to FIG. 4, the main control module 121, the general control module 122, and the fire control module 124 are all accommodated in the second compartment 1112, and the power distribution module 123 is arranged on an outer side of the container body 111.

In some other embodiments, the main control module 121, the power distribution module 123, and the fire control module 124 are all accommodated in the second compartment 1112.

In still some other embodiments, as shown in FIG. 5, the main control module 121, the general control module 122, the power distribution module 123, and the fire control module 124 are all accommodated in the second compartment 1112.

By using the foregoing technical solution, a risk of interference between the control apparatus 120 and the battery modules 112 is effectively reduced.

In some embodiments of the present application, a first access port and a second access port are provided on an outer wall of the container body 111, the first access port is provided opposite to the first compartment 1111 and in communication with the first compartment 1111, and the second access port is provided opposite to the second compartment 1112 and in communication with the second compartment 1112.

It may be understood that, the first access port penetrates the outer wall of the container body 111 and is in communication with the first compartment 1111, and the second access port penetrates the outer wall of the container body 111 and is in communication with the second compartment 1112.

For example, a plurality of energy storage containers 110 are stacked in the height direction Z, and the first access port and the second access port are provided on the same side or different sides of the container body 111 in the length direction X.

For example, a plurality of energy storage containers 110 are stacked in the height direction Z, and the first access port and the second access port are disposed on the same side or different sides of the container body 111 in the width direction Y.

For example, the energy storage device 100 includes a plurality of energy storage containers 110, some of the energy storage containers 110 are stacked in the height direction Z, the other energy storage containers 110 are arranged in the length direction X, and the first access port and the second access port are provided on the same side or different sides of the container body 111 in the width direction Y.

For example, the energy storage device 100 includes a plurality of energy storage containers 110, some of the energy storage containers 110 are stacked in the height direction Z, the other energy storage containers 110 are arranged in the width direction Y, and the first access port and the second access port are provided on the same side or different sides of the container body 111 in the length direction X.

By using the foregoing technical solution, it is convenient to service the battery module 112 in the first compartment 1111 and the control apparatus 120 in the second compartment 1112.

In some embodiments of the present application, referring to FIG. 3, the energy storage container 110 further includes a first maintenance door 140, and the first maintenance door 140 is movably connected to the container body 111 to open or close the first access port.

The movable connection between the first maintenance door 140 and the container body 111 means that the first maintenance door 140 can move relative to the container body 111, so that the first maintenance door 140 can separate from the first access port or cover the first access port.

For example, the first maintenance door 140 is hingedly connected to the container body 111, so that the first maintenance door 140 can rotate relative to the container body 111.

For example, the first maintenance door 140 is slidably connected to the container body 111, to be specific, the first maintenance door 140 can slide back and forth in a direction parallel to the outer wall of the container body 111 on which the first access port is provided.

By using the foregoing technical solution, it is convenient to service the battery module 112 in the first compartment 1111.

In some embodiments of the present application, referring to FIG. 3, the energy storage container 110 further includes a second maintenance door 150, and the second maintenance door 150 is movably connected to the container body 111 to open or close the second access port.

The movable connection between the second maintenance door 150 and the container body 111 means that the second maintenance door 150 can move relative to the container body 111, so that the second maintenance door 150 can separate from the second access port or cover the second access port.

For example, the second maintenance door 150 is hingedly connected to the container body 111, so that the second maintenance door 150 can rotate relative to the container body 111.

For example, the second maintenance door 150 is slidably connected to the container body 111, to be specific, the second maintenance door 150 can slide back and forth in a direction parallel to the outer wall of the container body 111 on which the second access port is provided.

By using the foregoing technical solution, it is convenient to service the control apparatus 120 in the second compartment 1112.

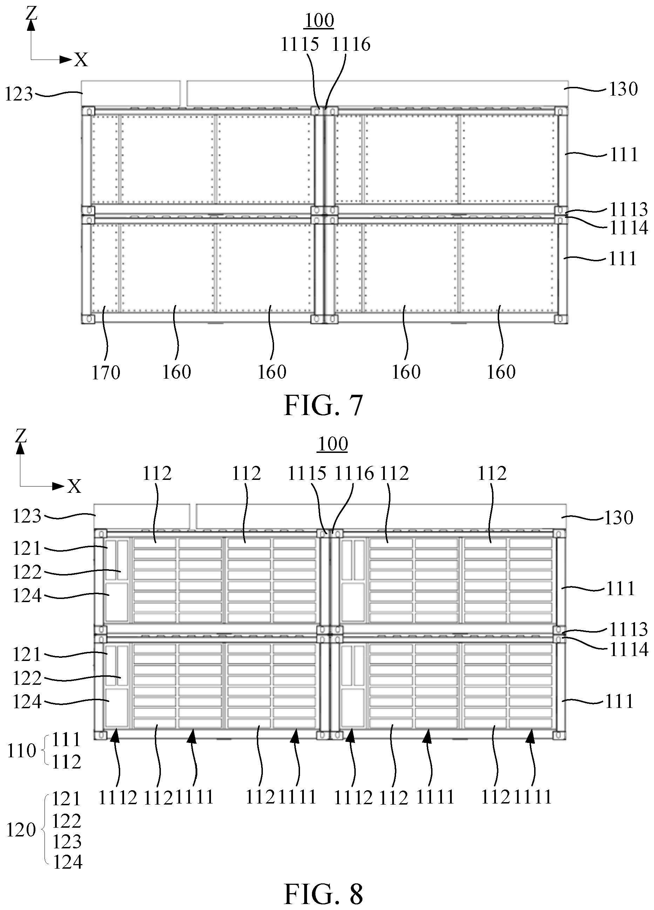

In some embodiments of the present application, referring to FIG. 7 and FIG. 8 together, the energy storage container 110 further includes a first sealing plate 160, and the first sealing plate 160 is detachably connected to the container body 111 to open or close the first access port.

It may be understood that, when the first sealing plate 160 is connected to the container body 111, the first sealing plate 160 covers the first access port. For example, the first sealing plate 160 and the container body 111 may be detachably connected by using a fastener such as a bolt or a screw.

By using the foregoing technical solution, it is not only convenient to service the battery module 112 in the first compartment 1111, but a structure of the energy storage container 110 can also be simplified, which reduces a volume of the energy storage container 110, and improves an energy density of the energy storage device 100, thereby effectively improving the performance of the energy storage device 100.

In some embodiments of the present application, referring to FIG. 7 and FIG. 8 together, the energy storage container 110 further includes a second sealing plate 170, and the second sealing plate 170 is detachably connected to the container body 111 to open or close the second access port.

It may be understood that, when the second sealing plate 170 is connected to the container body 111, the second sealing plate 170 covers the second access port. For example, the second sealing plate 170 and the container body 111 may be detachably connected by using a fastener such as a bolt or a screw.

By using the foregoing technical solution, it is not only convenient to service the control apparatus 120 in the second compartment 1112, but a structure of the energy storage container 110 can also be simplified, which reduces a volume of the energy storage container 110, and improves an energy density of the energy storage device 100, thereby effectively improving the performance of the energy storage device 100.

In some embodiments of the present application, referring to FIG. 4 and FIG. 5 together, the first compartment 1111 and the second compartment 1112 are arranged in the length direction X of the container body 111.

In some embodiments of the present application, the first compartment 1111 and the second compartment 1112 are arranged in the width direction Y of the container body 111.

In some embodiments of the present application, the first compartment 1111 and the second compartment 1112 are arranged in the height direction Z of the container body 111.

By using the foregoing technical solution, the internal layout structure of the energy storage container 110 can be optimized, so that the internal structure of the energy storage container 110 becomes more compact.

In some embodiments of the present application, referring to FIG. 3 to FIG. 8, the energy storage device 100 further includes a thermal management apparatus 130. The thermal management apparatus 130 is configured to exchange heat with the energy storage container 110, to regulate a temperature of the energy storage container 110. Components of the thermal management module and the battery modules 112 are independent of each other, thereby reducing a risk of interference between the thermal management module and the battery modules 112.

In some embodiments, the thermal management module includes a pumping apparatus and a first heat exchanger, and the pumping apparatus, the first heat exchanger, a thermal management component, and the pumping apparatus are sequentially connected, to form a coolant circulation loop a.

It should be noted that, the pumping apparatus (also referred to as a water pump) is a component configured to deliver a coolant. The first heat exchanger is a component configured to exchange heat with the coolant passing through the first heat exchanger. The first heat exchanger may be, but is not limited to, a plate heat exchanger, a shell and tube heat exchanger, an air cooler, a spiral plate heat exchanger, a heat exchange tube bundle, or the like. The coolant may be, but is not limited to, a mixed liquid of ethylene glycol and water.

Under a transport action of the pumping apparatus, the coolant can circulate in the coolant circulation loop a, and circulate through the pumping apparatus, the first heat exchanger, the thermal management component, and the pumping apparatus. The connection may be a direct connection, or may be an indirect connection through a pipeline.

In some embodiments, the thermal management module further includes a compressor, a throttling apparatus, and a second heat exchanger. The compressor, the second heat exchanger, the throttling apparatus, the first heat exchanger, and the compressor are sequentially connected, to form a refrigerant circulation loop b.

It should be noted that the connection may be a direct connection, or may be an indirect connection through a pipeline. The compressor is a component that provides power for circulation of a refrigerant and that can cool the refrigerant. The throttling apparatus is a component configured to reduce temperature and pressure. The throttling apparatus may be, but is not limited to, a throttle valve, an expansion valve, or the like. The second heat exchanger is a component configured to exchange heat with the refrigerant passing through the second heat exchanger. The second heat exchanger may be, but is not limited to, a plate heat exchanger, a shell and tube heat exchanger, an air cooler, a spiral plate heat exchanger, a heat exchange tube bundle, or the like. The refrigerant has a low boiling point and low heat of vaporization, may be vaporized and condensed at a low temperature, and can achieve a cooling effect by absorbing and releasing heat. The refrigerant may be, but is not limited to, freon, ammonia, carbon dioxide, RA (1,1,1,2-tetrafluoroethane), or R410A (freon R-410A refrigerant).

The first heat exchanger is disposed in both the coolant circulation loop a and the first refrigerant circulation loop b. A coolant flow channel and a refrigerant flow channel are provided inside the first heat exchanger. The coolant flow channel participates in forming the coolant circulation circuit a, and the coolant flow channel is used for flowing of the coolant therein. The refrigerant flow channel participates in forming the first refrigerant circulation circuit b, and the refrigerant flow channel is used for flowing of the refrigerant therein. The coolant flow channel and the refrigerant flow channel are not in communication with each other, so that the coolant and the refrigerant are not mixed. In the first heat exchanger, the coolant and the refrigerant may exchange heat, and in particular, heat of the coolant may be transferred to the refrigerant, so that the first heat exchanger can reduce a temperature of the coolant passing through the first heat exchanger.

The thermal management module further includes a cooling fan, and the cooling fan cools the second heat exchanger.

In some embodiments of the present application, referring to FIG. 3 and FIG. 4, the thermal management apparatus 130 and the power distribution module 123 are both arranged on an outer side of the container body 111.

In some embodiments, as shown in FIG. 3 and FIG. 4, the main control module 121, the general control module 122, and the fire control module 124 are all accommodated in the second compartment 1112.

By using the foregoing technical solution, the energy storage container 110, the thermal management apparatus 130, and the power distribution module 123 may be transported separately, which is more beneficial to improving convenience during transportation of the energy storage device 100 and further reducing transportation costs of the energy storage device 100, thereby further reducing the use costs of the energy storage device 100.

In some embodiments of the present application, referring to FIG. 3 and FIG. 4 together, the thermal management apparatus 130 and the power distribution module 123 are arranged in parallel in the direction perpendicular to the height direction Z of the container body 111, and the thermal management apparatus 130 and the power distribution module 123 are both stacked with the container body 111 in the height direction Z of the container body 111.

The thermal management apparatus 130 and the power distribution module 123 may be arranged in parallel in the length direction X of the container body 111, or may be arranged in parallel in the width direction X of the container body 111.

For example, a plurality of energy storage containers 110 are stacked in the height direction Z of the container body 111, and the thermal management apparatus 130 and the power distribution module 123 are stacked on the topmost energy storage container 110.

For example, a plurality of energy storage containers 110 are stacked in the height direction Z of the container body 111, and the thermal management apparatus 130 and the power distribution module 123 are stacked at the bottom of the lowermost energy storage container 110.

For example, a plurality of energy storage containers 110 are stacked in the height direction Z of the container body 111, and the thermal management apparatus 130 and the power distribution module 123 are stacked between any two adjacent energy storage containers 110.

By using the foregoing technical solution, an occupied area of the thermal management apparatus 130 and the power distribution module 123 can be reduced, so that when the energy storage device 100 occupies the same area, a larger number of energy storage containers 110 can be configured, thereby improving the energy density of the energy storage device 100, and effectively improving the performance of the energy storage device 100.

In some embodiments of the present application, referring to FIG. 5, the thermal management apparatus 130 and the container body 111 are stacked in the height direction Z of the container body 111.

In some embodiments, referring to FIG. 5, the main control module 121, the general control module 122, the power distribution module 123, and the fire control module 124 are all accommodated in the second compartment 1112.

For example, a plurality of energy storage containers 110 are stacked in the height direction Z of the container body 111, and the thermal management apparatus 130 is stacked on the topmost energy storage container 110.

For example, a plurality of energy storage containers 110 are stacked in the height direction Z of the container body 111, and the thermal management apparatus 130 is stacked at the bottom of the lowermost energy storage container 110.

For example, a plurality of energy storage containers 110 are stacked in the height direction Z of the container body 111, and the thermal management apparatus 130 is stacked between any two adjacent energy storage containers 110.

By using the foregoing technical solution, an occupied area of the thermal management apparatus 130 can be reduced, so that when the energy storage device 100 occupies the same area, a larger number of energy storage containers 110 can be configured, thereby improving the energy density of the energy storage device 100, and effectively improving the performance of the energy storage device 100.

In some embodiments of the present application, a size of the thermal management apparatus 130 is less than the size of the standard container.

For example, when the size of the standard container is 10 foots, a dimension of the thermal management apparatus 130 in the length direction X is less than a dimension of the 10-foot standard container in the length direction X, that is, the length of the thermal management apparatus 130 is less than the length of the 10-foot standard container; and/or a dimension of the thermal management apparatus 130 in the width direction Y is less than a dimension of the 10-foot standard container in the width direction Y, that is, the width of the thermal management apparatus 130 is less than the width of the 10-foot standard container; and a dimension of the thermal management apparatus 130 in the height direction Z is less than a dimension of the 10-foot standard container in the height direction Z, that is, the height of the thermal management apparatus 130 is less than the height of the 10-foot standard container.

For example, when the size of the standard container is 20 foots, the dimension of the thermal management apparatus 130 in the length direction X is less than a dimension of the 20-foot standard container in the length direction X, that is, the length of the thermal management apparatus 130 is less than the length of the 20-foot standard container; and/or the dimension of the thermal management apparatus 130 in the width direction Y is less than a dimension of the 20-foot standard container in the width direction Y, that is, the width of the thermal management apparatus 130 is less than the width of the 20-foot standard container; and the dimension of the thermal management apparatus 130 in the height direction Z is less than a dimension of the 20-foot standard container in the height direction Z, that is, the height of the thermal management apparatus 130 is less than the height of the 20-foot standard container.

For example, when the size of the standard container is 30 foots, the dimension of the thermal management apparatus 130 in the length direction X is less than a dimension of the 30-foot standard container in the length direction X, that is, the length of the thermal management apparatus 130 is less than the length of the 30-foot standard container; and/or the dimension of the thermal management apparatus 130 in the width direction Y is less than a dimension of the 30-foot standard container in the width direction Y, that is, the width of the thermal management apparatus 130 is less than the width of the 30-foot standard container; and the dimension of the thermal management apparatus 130 in the height direction Z is less than a dimension of the 30-foot standard container in the height direction Z, that is, the height of the thermal management apparatus 130 is less than the height of the 30-foot standard container.

For example, when the size of the standard container is 40 foots, the dimension of the thermal management apparatus 130 in the length direction X is less than a dimension of the 40-foot standard container in the length direction X, that is, the length of the thermal management apparatus 130 is less than the length of the 40-foot standard container; and/or the dimension of the thermal management apparatus 130 in the width direction Y is less than a dimension of the 40-foot standard container in the width direction Y, that is, the width of the thermal management apparatus 130 is less than the width of the 40-foot standard container; and the dimension of the thermal management apparatus 130 in the height direction Z is less than a dimension of the 40-foot standard container in the height direction Z, that is, the height of the thermal management apparatus 130 is less than the height of the 40-foot standard container.

For example, when the size of the standard container is 45 foots, the dimension of the thermal management apparatus 130 in the length direction X is less than a dimension of the 45-foot standard container in the length direction X, that is, the length of the thermal management apparatus 130 is less than the length of the 45-foot standard container; and/or the dimension of the thermal management apparatus 130 in the width direction Y is less than a dimension of the 45-foot standard container in the width direction Y, that is, the width of the thermal management apparatus 130 is less than the width of the 45-foot standard container; and the dimension of the thermal management apparatus 130 in the height direction Z is less than a dimension of the 45-foot standard container in the height direction Z, that is, the height of the thermal management apparatus 130 is less than the height of the 45-foot standard container.

By using the foregoing technical solution, during transportation, the dimension of the thermal management apparatus 130 does not exceed a corresponding dimension of the standard container during ocean transportation or land transportation, which is beneficial to improving convenience during transportation of the thermal management apparatus 130 and reducing transportation costs of the thermal management apparatus 130, thereby further reducing the use costs of the energy storage device 100.

In some embodiments of the present application, the size of the thermal management apparatus 130 is equal to the size of the standard container, in other words, the size of the thermal management apparatus 130 is the same as the size of the standard container.

That the size of the thermal management apparatus 130 is the same as the size of the standard container does not mean that the size of the thermal management apparatus 130 and the size of the standard container are exactly the same, but there may be an error within an error tolerance range between the two. For example, with reference to GB/T 1413-2008 and GB/T 1413-2023, a difference between a dimension of the thermal management apparatus 130 in the length direction X and the dimension of the standard container in the length direction X is within a range of ±10 mm, a difference between a dimension of the thermal management apparatus 130 in the width direction Y and the dimension of the standard container in the width direction Y is within a range of ±5 mm, and a difference between a dimension of the thermal management apparatus 130 in the height direction Z and the dimension of the standard container in the height direction Z is within a range of ±5 mm.

By using the foregoing technical solution, during transportation, the dimension of the thermal management apparatus 130 does not exceed a corresponding dimension of the standard container during ocean transportation or land transportation, which is beneficial to improving convenience during transportation of the thermal management apparatus 130 and reducing transportation costs of the thermal management apparatus 130, thereby further reducing the use costs of the energy storage system 1000 using the foregoing energy storage device 100.

In some embodiments of the present application, a weight of the energy storage container 110 is M, and M is less than or equal to 60 tons.

For example, the weight of the energy storage container 110 may be a point value of any one of 10 tons, 15 tons, 20 tons, 25 tons, 30 tons, 35 tons, 40 tons, 45 tons, 50 tons, 55 tons, or 60 tons, or a point value between any two thereof.

By using the foregoing technical solution, it facilitates handling operation of a related handling apparatus in a process of handling the energy storage container 110, thereby facilitating transferring of the energy storage container 110.

In some embodiments of the present application, M is less than or equal to 45 tons.

For example, the weight of the energy storage container 110 may be a point value of any one of 10 tons, 15 tons, 20 tons, 25 tons, 30 tons, 35 tons, 40 tons, or 45 tons, or a point value between any two thereof.

By using the foregoing technical solution, it better facilitates handling operation of a related handling apparatus in a process of handling the energy storage container 110, thereby better facilitating transferring of the energy storage container 110.

In some embodiments of the present application, a weight of the energy storage container 110 is M, a total weight of the battery cells 1121 in the container body 111 is M1, and (M1/M)×100%≥30%.

(M₁/M)×100% may be 30%, 35%, 40%, 45%, 50%, 55%, 60%, 65%, 70%, 75%, 80%, 85%, or the like.

By using the foregoing technical solutions, a weight ratio of the battery cells 1121 in the energy storage container 110 per unit volume can be increased, and an electric capacity of the energy storage container 110 per unit volume can be increased. In addition, during transportation of the energy storage container 110, more battery cells 1121 contributing to an energy storage capacity that are difficult to produce and cannot be produced at a destination are transported, but other structures of the energy storage device 100 may be produced at a place close to the destination, so that the other structures do not require transportation or require reduced transportation. After the energy storage container 110 is assembled into the energy storage device 100, it is beneficial to reducing the transportation costs of the assembled energy storage device 100.

In some embodiments of the present application, (M1/M)×100%≥80%.

(M₁/M)×100% may be 80%, 81%, 82%, 83%, 84%, 85%, 86%, 87%, 88%, 89%, 90%, or the like.

By using the foregoing technical solution, it is more beneficial to reducing transportation costs of the assembled energy storage device 100.

In some embodiments of the present application, a volume of the energy storage container 110 is V, a total volume of the battery cells 1121 in the container body 111 is V1, and (V1/V)×100%≥15%.

The battery cell 1121 includes a housing 11210, and a volume of the battery cell 1121 is a volume of the housing 11210. For example, the battery cell 1121 is a square-housing battery cell, and a product of the length, the width, and the height of the square-housing battery cell is a product of the length, the width, and the height of the housing 11210.

In some embodiments, the battery cell 1121 further includes an electrode terminal 11215. The electrode terminal 11215 is disposed on the housing 11210, and partially projects out of the housing 11210. The electrode terminal 11215 is electrically connected to the electrode assembly 11212. The part of the electrode terminal 11215 projecting out of the housing 11210 is not calculated as the volume of the battery cell 1121.

(V₁/V)×100% may be 15%, 20%, 35%, 40%, 45%, 50%, 55%, 60%, 65%, 70%, 75%, 80%, or the like.

By using the foregoing technical solutions, a volume ratio of the battery cells 1121 in the energy storage container 110 per unit volume can be increased, and an electric capacity of the energy storage container 110 per unit volume can be increased. In addition, during transportation of the energy storage container 110, more battery cells 1121 contributing to an energy storage capacity that are difficult to produce and cannot be produced at a destination are transported, but other structures of the energy storage device 100 may be produced at a place close to the destination, so that the other structures do not require transportation or require reduced transportation. After the energy storage container 110 is assembled into the energy storage device 100, it is beneficial to reducing the transportation costs of the assembled energy storage device 100.

In some embodiments of the present application, (V1/V)×100%≥50%.

(V₁/V)×100% may be 50%, 51%, 52%, 53%, 54%, 55%, 56%, 57%, 58%, 59%, 60%, 61%, 62%, 63%, 64%, 65%, 66%, 67%, 68%, 69%, 70%, 75%, 80%, 85%, 90%, or the like.

By using the foregoing technical solution, it is more beneficial to reducing transportation costs of the assembled energy storage device 100.

Referring to FIG. 1, an embodiment of the present application provides an energy storage system 1000, including the energy storage device 100 according to any one of the foregoing embodiments.

Because the energy storage system 1000 provided in this embodiment of the present application uses the energy storage device 100 according to any one of the foregoing embodiments, use costs of the energy storage system 1000 are effectively reduced.

In some embodiments of the present application, referring to FIG. 1, the energy storage system 1000 further includes a converter 200 and a power conversion apparatus 300, the converter 200 is configured to be electrically connected to the power conversion apparatus 300 and an electrical grid, and the power conversion apparatus 300 is configured to be electrically connected to the energy storage container 110.

The power conversion apparatus 300 may be electrically connected to the electrical grid, to convert electric power provided by the electrical grid. The energy storage container 110 is electrically connected to the power conversion apparatus 300. The power conversion apparatus 300 imports electric energy, provided by the electrical grid, after power conversion into the energy storage container 110 for storage.

In some embodiments, as shown in FIG. 1, the energy storage system 1000 includes a plurality of energy storage devices 100, a plurality of power conversion apparatuses 300, and a plurality of converters 200. The plurality of energy storage devices 100 are alternately arranged into a row at intervals in the length direction X of the container body 111, at least one power conversion apparatus 300 and at least one converter 200 are disposed between two adjacent energy storage devices 100, the two adjacent energy storage devices 100 are separated from the power conversion apparatus 300 and the converter 200, and a plurality of rows of energy storage devices 100 are arranged into an array structure in the width direction Y of the container body 111.

By using the foregoing technical solution, working stability of the energy storage system 1000 is effectively improved, thereby effectively improving the performance of the energy storage system 1000.

Referring to FIG. 2, an embodiment of the present application provides a charging network 2000, including a charging pile 400 and the energy storage device 100 according to any one of the foregoing embodiments, where the energy storage device 100 is configured to provide electric energy for the charging pile 400.

Because the charging network 2000 provided in this embodiment of the present application uses the energy storage system 1000 according to any one of the foregoing embodiments, use costs of the charging network 2000 are effectively reduced.

The foregoing descriptions are merely exemplary embodiments of the present application, but are not intended to limit the present application. Any modification, equivalent replacement, or improvement and the like made within the spirit and principle of the present application fall within the protection scope of the present application.

## Claims

1. An energy storage device, wherein the energy storage device comprises an energy storage container, the energy storage container comprises a container body and a plurality of battery modules accommodated in the container body, the battery module comprises a plurality of battery cells, dimensions of the container body are less than dimensions of a standard container in a first direction and a second direction, and the first direction and the second direction are not parallel to each other.

2. The energy storage device according to claim 1, wherein the first direction is a height direction of the container body.

3. The energy storage device according to claim 2, wherein the energy storage device comprises m₁ energy storage containers, and a sum of dimensions of m₁₁ energy storage containers of the m₁ energy storage containers in the height direction of the container body is equal to a sum of dimensions of n₁ standard containers in the height direction, wherein m₁ is a positive integer greater than or equal to 2, and n₁ is a positive integer less than m₁₁.

4. The energy storage device according to claim 3, wherein m₁₁=2, and n₁=1; or m₁₁=3, and n₁=1; or m₁₁=3, and n₁=2.

5. The energy storage device according to any one of claims 1 to 4, wherein the energy storage device comprises a plurality of energy storage containers, and the plurality of energy storage containers are stacked in the height direction of the container body.

6. The energy storage device according to claim 5, wherein the plurality of energy storage containers comprise a first energy storage container and a second energy storage container, the first energy storage container is located above the second energy storage container, a first connection portion is provided at a bottom of the container body of the first energy storage container, a second connection portion is provided at a top of the container body of the second energy storage container, and the first connection portion is connected to the second connection portion.

7. The energy storage device according to claim 5 or 6, wherein the plurality of energy storage containers comprise a first energy storage container and a second energy storage container, the first energy storage container is located above the second energy storage container, a first limiting portion is provided at a bottom of the container body of the first energy storage container, a second limiting portion is provided at a top of the container body of the second energy storage container, and the first limiting portion cooperates with the second limiting portion to limit relative positions of the first energy storage container and the second energy storage container in a direction perpendicular to the height direction of the container body.

8. The energy storage device according to any one of claims 2 to 7, wherein the second direction is a length direction of the container body, and a dimension of the container body in a width direction is the same as a dimension of the standard container in the width direction.

9. The energy storage device according to claim 8, wherein the energy storage device comprises a plurality of energy storage containers, m₂ energy storage containers of the plurality of energy storage containers are arranged in a row in the length direction of the container body, and m₃ rows of energy storage containers are stacked in the height direction of the container body, wherein m₂ and m₃ are both positive integers greater than or equal to 2.

10. The energy storage device according to claim 9, wherein a sum of dimensions of m₂₁ energy storage containers of the m₂ energy storage containers in the length direction of the container body is equal to a sum of dimensions of n₂ standard containers in the length direction, n₂ is a positive integer less than m₂₁, a sum of dimensions of m₃₁ rows of energy storage containers of the m₃ rows of energy storage containers in the height direction of the container body is equal to a sum of dimensions of n₃ standard containers in the height direction, and n₃ is a positive integer less than m₃₁.

11. The energy storage device according to claim 10, wherein
m₂₁=2, and n₂=1; or m₂₁=3, and n₂=1; or m₂₁=3, and n₂=2; and/or
m₃₁=2, and n₃=1; or m₃₁=3, and n₃=1; or m₃₁=3, and n₃=2.

12. The energy storage device according to any one of claims 9 to 11, wherein the plurality of energy storage containers comprise a third energy storage container and a fourth energy storage container arranged in the length direction of the container body, a third connection portion is provided on a side of the container body of the third energy storage container facing the fourth energy storage container, a fourth connection portion is provided on a side of the container body of the fourth energy storage container facing the third energy storage container, and the third connection portion is connected to the fourth connection portion.

13. The energy storage device according to any one of claims 2 to 7, wherein the second direction is a width direction of the container body, and a dimension of the container body in a length direction is the same as a dimension of the standard container in the length direction.

14. The energy storage device according to claim 13, wherein the energy storage device comprises a plurality of energy storage containers, m₄ energy storage containers of the plurality of energy storage containers are arranged in a column in the width direction of the container body, and m₅ columns of energy storage containers are stacked in the height direction of the container body, wherein m₄ and m₅ are both positive integers greater than or equal to 2.

15. The energy storage device according to claim 14, wherein a sum of dimensions of m₄₁ energy storage containers of the m₄ energy storage containers in the width direction of the container body is equal to a sum of dimensions of n₄ standard containers in the width direction, n₄ is a positive integer less than m₄₁, a sum of dimensions of m₅₁ columns of energy storage containers of the m₅ columns of energy storage containers in the height direction of the container body is equal to a sum of dimensions of n₅ standard containers in the height direction, and n₅ is a positive integer less than m₅₁.

16. The energy storage device according to claim 15, wherein
m₄₁=2, and n₄=1; or m₄₁=3, and n₄=1; or m₄₁=3, and n₄=2; and/or
m₅₁=2, and n₅=1; or m₅₁=3, and n₅=1; or m₅₁=3, and n₅=2.

17. The energy storage device according to any one of claims 14 to 16, wherein the plurality of energy storage containers comprise a fifth energy storage container and a sixth energy storage container arranged in the width direction of the container body, a fifth connection portion is provided on a side of the container body of the fifth energy storage container facing the sixth energy storage container, a sixth connection portion is provided on a side of the container body of the sixth energy storage container facing the fifth energy storage container, and the fifth connection portion is connected to the sixth connection portion.

18. The energy storage device according to any one of claims 2 to 7, wherein the second direction is a length direction of the container body, and a dimension of the container body in a width direction is less than a dimension of the standard container in the width direction.

19. The energy storage device according to claim 18, wherein the energy storage device comprises a plurality of energy storage containers, m₆ energy storage containers of the plurality of energy storage containers are arranged in the length direction of the container body, m₇ rows of energy storage containers are arranged into an array structure in the width direction of the container body, and m₈ array structures are stacked in the height direction of the container body, wherein m₆, m₇, and m₈ are all positive integers greater than or equal to 2.

20. The energy storage device according to claim 19, wherein a sum of dimensions of m₆₁ energy storage containers of the m₆ energy storage containers in the length direction of the container body is equal to a sum of dimensions of n₆ standard containers in the length direction, n₆ is a positive integer less than m₆₁, a sum of dimensions of m₇₁ energy storage containers of the m₇ energy storage containers in the width direction of the container body is equal to a sum of dimensions of n₇ standard containers in the width direction, n₇ is a positive integer less than m₇₁, a sum of dimensions of m₈₁ array structures of the m₈ array structures in the height direction of the container body is equal to a sum of dimensions of n₈ standard containers in the height direction, and n₈ is a positive integer less than m₈₁.

21. The energy storage device according to claim 20, wherein
m₆₁=2, and n₆=1; or m₆₁=3, and n₆=1; or m₆₁=3, and n₆=2; and/or
m₇₁=2, and n₇=1; or m₇₁=3, and n₇=1; or m₇₁=3, and n₇=2; and/or
m₈₁=2, and n₈=1; or m₈₁=3, and n₈=1; or m₈₁=3, and n₈=2.

22. The energy storage device according to any one of claims 2 to 7, wherein the second direction is a width direction of the container body, and a dimension of the container body in a length direction is greater than a dimension of the standard container in the length direction.

23. The energy storage device according to any one of claims 1 to 22, wherein the energy storage device further comprises a control apparatus configured to be electrically connected to the battery modules, the container body comprises a first compartment and a second compartment separated from each other, the battery modules are accommodated in the first compartment, and at least a part of the control apparatus is accommodated in the second compartment.

24. The energy storage device according to claim 23, wherein the control apparatus comprises a main control module, a general control module, a power distribution module, and a fire control module; the battery modules are electrically connected to the main control module; the general control module is electrically connected to the main control module; the main control module, the general control module, and the fire control module are all electrically connected to the power distribution module; and at least one of the main control module, the general control module, the power distribution module, and the fire control module is accommodated in the second compartment.

25. The energy storage device according to claim 23 or 24, wherein a first access port and a second access port are provided on an outer wall of the container body, the first access port is provided opposite to the first compartment and in communication with the first compartment, and the second access port is provided opposite to the second compartment and in communication with the second compartment.

26. The energy storage device according to claim 25, wherein the energy storage container further comprises a first maintenance door, and the first maintenance door is movably connected to the container body to open or close the first access port.

27. The energy storage device according to claim 25, wherein the energy storage container further comprises a second maintenance door, and the second maintenance door is movably connected to the container body to open or close the second access port.

28. The energy storage device according to claim 25, wherein the energy storage container further comprises a first sealing plate, and the first sealing plate is detachably connected to the container body to open or close the first access port.

29. The energy storage device according to claim 25, wherein the energy storage container further comprises a second sealing plate, and the second sealing plate is detachably connected to the container body to open or close the second access port.

30. The energy storage device according to any one of claims 23 to 29, wherein the first compartment and the second compartment are arranged in the length direction or the width direction of the container body.

31. The energy storage device according to claim 23, wherein the energy storage device further comprises a thermal management apparatus configured to exchange heat with the energy storage container, the control apparatus comprises a power distribution module, the thermal management apparatus is electrically connected to the power distribution module, and the thermal management apparatus and the power distribution module are both arranged on an outer side of the container body.

32. The energy storage device according to claim 31, wherein the thermal management apparatus and the power distribution module are arranged in parallel in the direction perpendicular to the height direction of the container body, and the thermal management apparatus and the power distribution module are both stacked with the container body in the height direction of the container body.

33. The energy storage device according to any one of claims 1 to 30, wherein the energy storage device further comprises a thermal management apparatus configured to exchange heat with the energy storage container, and the thermal management apparatus and the container body are stacked in the height direction of the container body.

34. The energy storage device according to any one of claims 31 to 33, wherein a size of the thermal management apparatus is less than or equal to the size of the standard container.

35. The energy storage device according to any one of claims 1 to 34, wherein a weight of the energy storage container is M, and M is less than or equal to 60 tons.

36. The energy storage device according to claim 35, wherein M is less than or equal to 45 tons.

37. The energy storage device according to any one of claims 1 to 36, wherein a weight of the energy storage container is M, a total weight of the battery cells in the container body is M1, and (M1/M)×100%≥30%.

38. The energy storage device according to claim 37, wherein (M1/M)×100%≥80%.

39. The energy storage device according to any one of claims 1 to 38, wherein a volume of the energy storage container is V, a total volume of the battery cells in the container body is V1, and (V1/V)×100%≥15%.

40. The energy storage device according to claim 39, wherein (V1/V)×100%≥50%.

41. An energy storage system, wherein the energy storage system comprises the energy storage device according to any one of claims 1 to 40.

42. The energy storage system according to claim 41, wherein the energy storage system further comprises a converter and a power conversion apparatus, the converter is configured to be electrically connected to the power conversion apparatus and an electrical grid, and the power conversion apparatus is configured to be electrically connected to the energy storage container.

43. A charging network, wherein the charging network comprises a charging pile and the energy storage device according to any one of claims 1 to 40, and the energy storage device is configured to provide electric energy for the charging pile.
